# EUROPEAN PATENT APPLICATION

(11) **EP 4 482 078 A1**
(43) Date of publication of application: **25.12.2024**
(21) Application number: 23180460.0
(22) Date of filing: 20.06.2023
(51) Int. Cl.: H04L 9/00, G06Q 10/30, G06Q 10/0833, G06Q 50/04, H04L 9/40

(54) **MONITORING FEEDSTOCK PROPERTIES**

(71) Applicant: BASF SE, 67056 Ludwigshafen am Rhein (DE)
(72) Inventor: Grumbrecht, Bastian, 67061 Ludwigshafen am Rhein (DE); Frey, Bodo, 67056 Ludwigshafen am Rhein (DE); Krei, Georg Arnold, 67056 Ludwigshafen am Rhein (DE); Mayer, Marion, 67056 Ludwigshafen am Rhein (DE); Feyen, Mathias, 67056 Ludwigshafen am Rhein (DE); Haake, Mathias, 67056 Ludwigshafen am Rhein (DE); Graf, Nicole, 67061 Ludwigshafen am Rhein (DE); Pack, Robert, 67061 Ludwigshafen am Rhein (DE); Strege, Stefan, 67056 Ludwigshafen am Rhein (DE); Klosterhalfen, Steffen Thomas, SK1 3GG Stockport (GB)
(74) Representative: BASF IP Association

(57) **Abstract**

The invention relates to the field of sustainability, in particular to the field of monitoring feedstocks for chemical production networks. The disclosure relates to methods, apparatuses, systems, decentral network nodes, feedstock and computer elements for monitoring, registering and/or attributing at least one property of a feedstock entering a chemical production network.

## Description

### Technical field

The invention relates to the field of sustainability, in particular to the field of monitoring feedstocks for chemical production networks. The disclosure relates to methods, apparatuses, systems, decentral network nodes, feedstock and computer elements for monitoring and/or registering feedstock properties for balancing based on the system boundary of the chemical production network.

### Technical Background

Chemical production networks are large scale productions producing more than thousands of chemical products through chemical conversion. With the transformation to circular economy feedstocks for chemical production networks experience dynamic changes. Monitoring of feedstocks hence becomes increasingly complex.

### Summary

In one aspect disclosed is a method for monitoring at least one property of one or more feedstock(s) for a chemical production network or component(s) thereof, the method comprising the steps of:
- collecting property data of the one or more feedstock(s) or component(s) thereof in relation to generation of the feedstock or the component thereof, wherein collected property data relates to one or more production and/or recycling input(s) used to produce the feedstock or the component thereof;
- providing one or more decentral identifier(s) associated with at least one property of the one or more feedstock(s) or component(s) thereof and the one or more production and/or recycling input(s);
- generating one or more access element(s) including the one or more decentral identifier(s) and the one or more digital representation(s);
- providing the one or more access element(s) to a decentral network for access to the property data by one or more data consuming network node(s) of the decentral network under control of a data providing network node, wherein the one or more data consuming network node(s) are configured to register and/or attribute the at least one property of one or more feedstock(s) or component(s) thereof to output material(s) produced by the chemical production network.

In another aspect disclosed is an apparatus for monitoring at least one property of one or more feedstock(s) for a chemical production network or component(s) thereof, the apparatus comprising:
- a data collection interface configured to collect property data of the one or more feedstock(s) or component(s) thereof in relation to generation of the feedstock or the component thereof, wherein collected property data relates to one or more production and/or recycling input(s) used to produce the feedstock or the component thereof;
- decentral identifier provider interface configured to provide one or more decentral identifier(s) associated with at least one property of the one or more feedstock(s) or component(s) thereof and the one or more production and/or recycling input(s);
- an access element generator configured to generate one or more access element(s) including the one or more decentral identifier(s) and the one or more digital representation(s);
- a decentral network interface configured to provide the one or more access element(s) to a decentral network for access to the property data by one or more data consuming network node(s) of the decentral network under control of a data providing network node, wherein the one or more data consuming network node(s) are configured to register and/or attribute the at least one property of one or more feedstock(s) or component(s) thereof to output material(s) produced by the chemical production network.

In another aspect disclosed is a method for monitoring at least one property of one or more feedstock(s) for a chemical production network or component(s) thereof, the method comprising the steps of:
- collecting property data of the one or more input material(s), in particular feedstock(s), or component(s) thereof in relation to generation of the input material, e.g. individual input material, in particular the feedstock, e.g. individual feedstock, or the component, e.g. the individual component, thereof, wherein collected property data relates to one or more production and/or recycling input(s) used to produce the input material, e.g. individual input material, in particular the feedstock, e.g. individual feedstock, or the component, e.g. individual component, thereof;
- optionally generating at least one digital relationship based on the one or more production and/or recycling input(s) used to generate the input material, e.g. individual input material, in particular the feedstock, e.g. individual feedstock, or the component, e.g. the individual component, thereof;
- providing one or more decentral identifier(s) associated with at least one property of one or more input material(s) or component(s) thereof, in particular one or more feedstock(s) or component(s) thereof, including the one or more production and/or recycling input(s);
- generating one or more digital representation(s) of the property data optionally including a relationship representation of the digital relationship, in particular generating one or more digital representation(s) of the digital relationship;
- generating one or more access element(s) including the one or more decentral identifier(s) and the one or more digital representation(s) ), optionally wherein the relationship representation is associated with at least one decentral relationship identifier, in particular wherein a relationship access element including at least one decentral relationship identifier and the relationship representation is generated;
- providing the one or more access element(s) to a decentral network for access to the property data and/or optionally the digital relationship by one or more data consuming network node(s) of the decentral network under control of a data providing network node, wherein the one or more data consuming network node(s) are configured to register and/or attribute the at least one property of one or more input material(s) or component(s) thereof, in particular one or more feedstock(s) or component(s) thereof, to output material(s) produced by the production system, in particular the chemical production network.

In another aspect disclosed is an apparatus for monitoring at least one property of one or more input material(s) or component(s) thereof for a production system, in particular one or more feedstock(s) for a chemical production network or component(s) thereof, the apparatus comprising:
- a data collection interface configured to collect property data of the one or more input material(s), in particular feedstock(s), or component(s) thereof in relation to generation of the input material, e.g. individual input material, in particular the feedstock, e.g. individual feedstock, or the component, e.g. the individual component, thereof, wherein collected property data relates to one or more production and/or recycling input(s) used to produce the input material, e.g. individual input material, in particular the feedstock, e.g. individual feedstock, or the component, e.g. individual component, thereof;
- a relationship generator configured to generate at least one digital relationship based on the one or more production and/or recycling input(s) used to generate the input material, e.g. individual input material, in particular the feedstock, e.g. individual feedstock, or the component, e.g. the individual component, thereof;
- decentral identifier provider interface configured to provide providing one or more decentral identifier(s) associated with at least one property of one or more input material(s) or component(s) thereof, in particular one or more feedstock(s) or component(s) thereof, including the one or more production and/or recycling input(s);
- a representation generator configured to generate one or more digital representation(s) of the property data including a relationship representation of the digital relationship, in particular generating one or more digital representation(s) of the digital relationship;
- an access element generator configured to generate one or more access element(s) including the one or more decentral identifier(s) and the one or more digital representation(s) ), wherein the relationship representation is associated with at least one decentral relationship identifier, in particular wherein a relationship access element including at least one decentral relationship identifier and the relationship representation is generated;
- a decentral network interface configured to provide the one or more access element(s) to a decentral network for access to the property data and/or the digital relationship by one or more data consuming network node(s) of the decentral network under control of a data providing network node, wherein the one or more data consuming network node(s) are configured to register and/or attribute the at least one property of one or more input material(s) or component(s) thereof, in particular one or more feedstock(s) or component(s) thereof, to output material(s) produced by the production system, in particular the chemical production network.

In another aspect disclosed is a method for registering and/or attributing at least one property of one or more input material(s) or component(s) thereof, in particular one or more feedstock(s) or component(s) thereof, entering a production system, in particular a chemical production network, the method comprising the steps:
- providing one or more decentral identifier(s) associated with one or more input material(s), in particular one or more feedstock(s), to be fed to the production system, in particular the chemical production network;
- optionally gathering based on one or more access element(s) generated and/or provided according to the methods or by the apparatuses disclosed herein one or more representation(s) related to the decentral identifier associated with one or more input material(s), in particular one or more feedstock(s), to be fed to the production system, in particular chemical production network;
- gathering based on one or more access element(s) generated and/or provided according to the methods or by the apparatuses disclosed herein property data from a producer of the one or more input material(s), in particular one or more feedstock(s), to be fed to the production system, in particular chemical production network, and/or one or more producer(s) of component(s) of the one or more input material(s), in particular one or more feedstock(s), to be fed to the production system, in particular chemical production network;
- registering at least one property at least one property of one or more input material(s) or component(s) thereof, in particular one or more feedstock(s) or component(s) thereof, entering a production system, in particular a chemical production network, based on the gathered property data; and
- providing at least one registered property of the one or more input material(s) or component(s) thereof, in particular one or more feedstock(s) or component(s) thereof, for attributing the at least one property to output material(s) produced by the production system, in particular chemical production network.

In another aspect disclosed is an apparatus for registering and/or attributing at least one property of one or more input material(s) or component(s) thereof, in particular one or more feedstock(s) or component(s) thereof, the apparatus comprising:
- an identifier providing interface configured to provide one or more decentral identifier(s) associated with one or more input material(s), in particular one or more feedstock(s), to be fed to the production system, in particular the chemical production network;
- a data gathering interface configured to gather property data from a producer of the one or more input material(s), in particular one or more feedstock(s), to be fed to the production system, in particular chemical production network, and/or one or more producer(s) of component(s) of the one or more input material(s), in particular one or more feedstock(s), to be fed to the production system, in particular chemical production network and to gather property data from a producer of the one or more input material(s), in particular one or more feedstock(s), to be fed to the production system, in particular chemical production network, and/or one or more producer(s) of component(s) of the one or more input material(s), in particular one or more feedstock(s), to be fed to the production system, in particular chemical production network, and
- optionally to gather based on one or more access element(s) generated and/or provided according to the methods or by the apparatuses disclosed herein one or more representation(s) related to the decentral identifier associated with one or more input material(s), in particular one or more feedstock(s), to be fed to the production system, in particular chemical production network;
- a registration interface configured to register at least one property at least one property of one or more input material(s) or component(s) thereof, in particular one or more feedstock(s) or component(s) thereof, entering a production system, in particular a chemical production network, based on the gathered property data and to provide at least one registered property of the one or more input material(s) or component(s) thereof, in particular one or more feedstock(s) or component(s) thereof, for attributing the at least one property to output material(s) produced by the production system, in particular chemical production network.

In another aspect disclosed is a decentral network node configured to provide one or more access element(s) according to the methods for monitoring at least one property of one or more input material(s) or component(s) thereof for a production system, in particular one or more feedstock(s) for a chemical production network or component(s) thereof, as disclosed herein.

In another aspect disclosed is a decentral network node configured to register and/or attribute at least one property of one or more input material(s) or component(s) thereof, in particular one or more feedstock(s) or component(s) thereof, according to the methods disclosed herein.

In another aspect disclosed is an input material, in particular a feedstock, associated with the access element generated and provided according to the methods or by the apparatuses disclosed herein.

In another aspect disclosed is a production system, in particular a chemical production network, wherein an input material, in particular a feedstock, associated with the access element generated and provided according to the methods or by the apparatuses disclosed herein is fed to the chemical production network.

In another aspect disclosed is a use of the access element as generated and provided according to the methods or by the apparatus for registering and/or attributing at least one property of one or more input material(s) or component(s) thereof, in particular one or more feedstock(s) or component(s) thereof, disclosed herein.

In another aspect the present disclosure relates to a computer element, such as a computer program or computer readable medium, with instructions, which when executed on one or more computing node(s) e.g. of a decentral network is configured to carry out the steps of the method(s) disclosed herein or is configured to be carried out by the apparatus(es) disclosed herein.

Any disclosure, embodiments and examples described herein relate to the methods, the systems, apparatuses, chemical products, chemical product passports, authorization rules, uses and computer elements lined out above and below. Advantageously, the benefits provided by any of the embodiments and examples equally apply to all other embodiments and examples.

### Embodiments

Reliable feedstock monitoring is crucial for large scale chemical plants and chemical production networks relying on such plants. With multiple different types entering such chemical production network, reliable monitoring of feedstock entering and of material flows inside the chemical production network is increasingly challenging. To improve monitoring of feedstock and material flows inside the chemical production network, a monitoring concept based on data sharing in material chains is proposed. Such data sharing based monitoring allows for controlled access to property data by participants of the material chain. Decentral networks allow for controlled peer-to-peer communication between participants of material chains. By making data related to the production of the feedstock or the component thereof, e.g. property data, accessible across participant(s) of the material chain more efficient and reliable monitoring can be ensured through accessing such data in a controlled and targeted manner. The monitoring concept allows for reliable monitoring of feedstocks entering chemical production networks and of material flows inside chemical production networks.

In particular, by collecting property data at the production stage of the feedstock or the component thereof and providing access to such data via access elements through a decentral network enables critical data sharing between participants of the material chain or loop. Further in particular, by using digital relationships stored decentrally per participant of the material chain or loop allows to recursively reconstruct the bill of materials only for those parts of the property data that is relevant to the use of the feedstock for chemical production networks. Further in particular, by providing such data relevant to selected participants such as to chemical producers provides producers with the required control over sensitive production information. Further in particular, by providing such data relevant to the feedstock of chemical production networks allows for more targeted monitoring of feedstocks entering chemical production networks and of material flows inside chemical production networks.

By relating the decentral relationship identifier and the relationship representation per stage of the recycling and/or production chain the depth in the properties or the property data available via the decentral network can be enhances while not disclosing the full bill of materials. Through the relationship access element, the respective input(s) with the output(s) are accessible in a controlled and targeted manner depending on the participant of the production and/or recycling chain. This way the attribution of input material or feedstock properties provided to the chemical producer can be enhanced. This is particularly relevant for chemical producers owing to the complexity of material flows in chemical production networks.

In the following, embodiments of the present disclosure will be outlined by ways of examples. It is to be understood that the present disclosure is not limited to said embodiments and/or examples.

The production system may be associated with a producer of a product. The production system may include a discrete production using discrete products to produce an output. The production system may be a chemical production network. The chemical production network may be associated with a chemical producer. The chemical production network may include one or more one or more chemical, physical, thermal and/or mechanical process(es). The chemical production network may produce one or more output material(s) through chemical and/or mechanical processing. The chemical production network may include multiple types of production processes for producing one or more output material(s) from one or more input material(s). The chemical production network may produce one or more output mate-rial(s) from input material(s) provided to the chemical production network. The chemical production network may include a complex production network producing multiple chemical products via multiple production process(es). The chemical production network may include connected, inter-connected and/or non-connected production process(es). The chemical production network may include a composite or Verbund network.

The chemical production network may include identity preserving or segregated production process(es). Identity preserving or segregated in this context may refer to environmental attribute(s) of input material(s) being preserved or segregated in the production process(es). Examples are non-fossil, e.g. renewable or recycled, input materials used to produce the one or more plastic additive(s) without fossil content. Further examples are fossil input material(s) used to produce the one or more plastic additive(s) with fossil content. Chemical production networks may include non-identity preserving or non-segregated production process(es). Non-identity preserving or non-segregated in this context may refer to non-fossil input material(s) being mixed with fossil input material(s) to produce the plastic additive(s). For example, fossil and renewable input mate-rials may be mixed to produce the plastic additive(s) with fossil and renewable content.

The chemical production network may include one or more production process(es) with multiple production steps. The production steps included in the chemical network may be defined by the physical system boundary of the chemical production network. The system boundary may be defined by location and/or control over production processes or steps. The system boundary may be defined by a site of the chemical production network. The system boundary may be defined by production process(es) or step(s) controlled by one entity or multiple entities jointly. The system boundary may be defined by the value chain with staggered production process(es) or step(s) to the chemical end product, which may be controlled by multiple entities jointly or separately. The chemical production network may include a waste collection, a sorting step, a recycling step such as pyrolysis, a cracking step such as steam cracking, a separation step to separate intermediates of one process step and further processing steps to convert such intermediates to output material(s) leaving the system boundary of the chemical production network. The input material(s) may enter the physical system boundary of the chemical production network. The entry point(s) of the chemical production network may be marked by the entry of input material(s) to the chemical production network or the system boundary of the chemical network. The output material(s) may leave the physical system boundary of the chemical production network. The exit point(s) of the chemical production network may be marked by the exit of output material(s) from the chemical production network or the system boundary of the chemical network. The chemical production network may include material flows including one or more connected or interconnected multi input-multi output processes.

The chemical production network may include one or more production chain(s) for the production of plastic additives. The production chain(s) for the production of plastic additives may be inter-connected. The production chain(s) for the production of plastic additives may be interconnected with production chain(s) for the production of other output material(s). The production chain(s) for the production of plastic additives may include production chain(s) for the production of intermediates used to produce plastic additives. The production chain(s) for the production of plastic additives may use input material(s) provided by chemical network(s) for the production of intermediates usable to produce plastic additives.

One or more input material(s) may be provided to the production system for producing one or more output(s). The input material may be an input for a chemical production network also referred to as a pre-cursor product, an intermediate material, a feedstock or a raw material used to produce one or more output material(s) of the chemical production network. The output material(s) may be produced from one or more input material(s) through one or more chemical process(s) of the chemical production network. The input material may comprise any input material entering the chemical production network at any entry point. The input material may include input material(s) such as a natural, organic or inorganic, and/or output material(s). The input material may be fed to the chemical production network to produce one or more output material(s). The input material may be fed to chemical production network including one or more production process(es) with multiple process steps. The input material may be fed to the chemical production network at the start of the production process or at any intermediate stage of the production process. The input materials entering the chemical production network may be used to produce one or more output material(s).

The input material may be associated with an input material identifier, in particular a decentral input material or feedstock identifier. The input material identifier may comprise any identifier uniquely associated with the input material. The input material identifier may be associated with the physical entity of the input material. The input material identifier may be associated with a single batch of input material. The input material identifier may be as-sociated with a group of input materials. The identifier may be associated with multiple physical entities of the input material. The input material identifier may be associated with continuous or semi-continuous stream of input material. The input material identifier may be associated with a stream of the input material e.g. over a certain time period or from a certain supplier. The input material identifier may be linked or connected to one or more environmental attribute(s).

Property data may relate to one property or more properties of the input material, in particular the feedstock. The properties may relate to environmental, technical, recyclability or circularity characteristics(s) associated with the input material(s), chemical process(es), chemical production network(s) and/or outputs. The property data may relate to at least one property of the feedstock relating to at least one material flow type including at least one feedstock type, at least one component type, at least one waste stream type, at least one waste stream fraction type, at least one biomass type or at least one renewable type. The property data may include at least one property of the feedstock relating to at least one origin, at least one condition relating to the generation of the feedstock, at least one environmental attribute, and/or at least one allocation scheme.

Environmental attribute may refer to a property related to the environmental impact. Such proper-ty may be the property of input material(s), chemical process(es), chemical production network(s) and/or plastic additive(s). The environmental attribute may indicate an environmental performance of input material(s), chemical process(es), chemical production network(s) and/or plastic additive(s). The environmental attribute may be derived from properties of input material(s), chemical process(es), chemical production network(s) and/or plastic additive(s). The environmental attribute may be associated with the environmental impact of input material(s), chemical process(es), chemical production network(s) and/or plastic additive(s) at any stage of the lifecycle of the plastic additive(s). The stages may include providing raw material, providing feedstock, producing chemical products, such as intermediate products or end products, producing discrete products by using the chemical products, using chemical products or discrete products, treating end-of-life products, recycling end-of-life products, disposing end-of-life products, reusing components from end-of-life products or any subset of stages. The environmental attribute may be specified or may be derived from any activity of one or more entities participating at any stage of the lifecycle of one or more material(s) or product(s).

The environmental attribute may include one or more characteristic(s) that are attributable to environmental impact of input material(s), chemical process(es), chemical production network(s) and/or plastic additive(s). The environmental attribute may include environmental, technical, recyclability or circularity characteristics(s) associated with the environmental impact of input material(s), chemical process(es), chemical production network(s) and/or plastic additive(s).

The environmental attribute may include one or more characteristic(s) that are attributable to the environmental impact of input material(s), chemical process(es), chemical production network(s) and/or plastic additive(s). The environmental attribute may include environmental, technical, recyclability or circularity characteristics(s) associated with the environmental impact of input mate-rial(s), chemical process(es), chemical production network(s) and/or plastic additive(s). The one or more environmental attribute(s) may be attributable to the environmental impact of the plastic additive. The one or more environmental attribute(s) may relate to environmental, technical, recyclability, circularity and/or complementary risk characteristic(s) of the plastic additive.

Environmental characteristic(s) may specify or quantify ecological criteria associated with environmental impact. Environmental characteristic(s) may be or may be derived from measurements taken during the lifecycle. Environmental characteristics may be determined at any stage of the lifecycle and may characterize the environmental impact for such stage or up to such stage. Environmental characteristic(s) may for example include carbon footprint, greenhouse gas emissions, resource usage, air emissions, ozone depletion potential, water pollution, noise pollution, energy consumption, waste reduction, or eutrophication potential. Environmental characteristic(s) may for example include product characteristics related to the production of the product like bio based, vegetable based, animal based, halogen-free, fluorine-free, vegan, halal, kosher, palm oil-free, natural, tox-fee, volatile organic compounds-free or any combinations thereof.

Technical characteristic(s) may specify or quantify performance at least indirectly associated with the environmental impact. Technical characteristic(s) may be or may be derived from measurements taken during the lifecycle. Technical characteristics may be determined at any stage of the lifecycle and may characterize the performance for such stage or up to such stage. Technical characteristic(s) may for example include chemical composition data, raw material composition such as bio-based or recycled input material content specifying e.g. x% non fossil and y% fossil content, bill of materials, product specification data such as product purity, product form (as indication to their impact on dust formation/release), safety data, product extractability, migration data, toxicological data or ecotoxicological data, product component data, safety data, application property data, application instructions, quality data or any combinations thereof.

Circularity characteristic(s) may specify or quantify the life cycle characteristics associated with circular uses. Circularity characteristic(s) may be or may be derived from measurements taken during the lifecycle. Circularity characteristic(s) may be or may be derived from circular data recorded in one or more prior lifecycle(s) including reuse. Circularity characteristic(s) may be deter-mined at any stage of the lifecycle and may characterize the reuse or recycling performance for such stage or up to such stage. Circularity characteristic(s) may for example include recycling data, reuse rate, recycling rate, recycling loops, reuse performance, reused quality or any combinations thereof.

Recyclability characteristic(s) may specify or quantify life cycle characteristics associated with recycling uses. Recyclability characteristic(s) may include the composition of the material including specifically tailored constituents making the material suitable for recycling. Recyclability characteristic(s) may be or may be derived from measurements taken during the lifecycle. Recyclability characteristic(s) may be or may be derived from recycling data recorded in one or more prior lifecycle(s). Recyclability characteristics may be determined at any stage of the lifecycle and may characterize the recycling performance for such stage or up to such stage. Recyclability characteristic(s) may for example include recycling data, number of reuses, recyclate composition, recyclate quality, waste stream composition, waste stream quality or any combinations thereof.

Feedstock generation chain may include any participant participating in the generation of the feedstock. The feedstock generation chain may include the production and/or recycling chain. The feedstock generation chain may include one or more production and/or recycling stage(s) of the feedstock recycling and/or production chain. The feedstock generation chain may include one or more participant(s) participating in the generation of the feedstock or the component thereof. Such generation may relate to production and/or recycling processes. The production chain may include one or more participant(s) participating in the production of feedstock or the component thereof such as crude oil being refined or bio-based material such as crops being processed. The recycling chain may include one or more participant(s) participating in the recycling of feedstock or the component thereof such as sorting, collecting and/or recycling of waste streams or end-of-life products.

In one embodiment the property data is collected in association with the generation of the feedstock or the component thereof by the participant of the feedstock generation chain. The property data associated with one or more production and/or recycling input(s) used to generate the feedstock or the component thereof, in particular the related decentral identifiers associated with the one or more production input(s), may be collected. The property data associated with one or more production and/or recycling input(s) used to generate the feedstock or the component thereof may be collected per generation stage of the feedstock generation chain.

In another embodiment the property data associated with one or more production and/or recycling input(s) used to generate the feedstock or the component thereof at a generation stage of the feedstock generation chain are collected. the property data associated with one or more production and/or recycling input(s) used to generate the feedstock or the component thereof at the production and/or recycling stage of the feedstock recycling and/or production chain associated with the feedstock or the component thereof are collected.

In another embodiment the property data associated with one or more production and/or recycling input(s) to the generation stage of the feedstock or the component thereof are collected for the respective generation stage. The property data associated with one or more production and/or recycling input(s) that are used for the generation stage of the feedstock or the component thereof are collected per generation stage and/or per participant of the generation chain. The property data associated with one or more production and/or recycling input(s) to the generation of the feedstock or the component thereof at the respective generation stage of the feedstock or the component thereof may be collected.

In another embodiment the relationship access element is provided for access to the digital relationship between the feedstock or the component thereof at the generation stage of the feedstock or the component thereof and the respective one or more production and/or recycling input(s) at said generation stage. One or more relationship access element(s) may be configured for access to property data from one or more participant(s) of the feedstock generation chain. The one or more access element(s) may be configured for access to property data per generation stage of the feedstock generation chain by one or more participant(s) using the feedstock.

In another embodiment the one or more access element(s) may be configured for recursively accessing property data per generation stage of the feedstock generation chain. The recursive access may be based on one or more relationship representation(s) provided by one or more participant(s) of the feedstock generation chain. The one or more relationship representation(s) may be provided by one or more participant(s) of the feedstock generation chain to the decentral network. The one or more relationship representation(s) may be accessed recursively by one or more participant(s) of the material or recycling chain, in particular sorter, collector and/or recycler system participant(s).

The property data may be accessed per generation stage of the feedstock from one or more participant(s) of the generation chain, in particular the feedstock and feedstock component producer(s). The property data may be accessed by generating at least one relationship access element. The method for monitoring may further include the steps of:
- generating at least one digital relationship based on the one or more production and/or recycling input(s) used to generate the feedstock or the component thereof;
- generating one or more digital representation(s) of the property data including a relationship representation of the digital relationship;
- wherein the one or more access element(s) include the relationship representation associated with at least one decentral relationship identifier;
- providing the one or more access element(s) to a decentral network for access to the digital relationship by one or more data consuming network node(s) of the decentral network under control of a data providing network node

In another embodiment the property data includes at least one property of the feedstock relating to at least one material flow type including at least one feedstock type, at least one component type, at least one waste stream type, at least one waste stream fraction type, at least one biomass type or at least one renewable type. The material flow type may relate to fossil or non-fossil including e.g. recycled, bio-based and/or renewable material flow. The feedstock type may relate the type of fossil or non-fossil material contained in the feedstock. Examples are the type of recyclate for recycled feedstock such as pyrolysis oil, pyrolysis gas, or the like, the type of fossil material such as crude oil, natural gas, or coal or type of non-fossil material such as bio-naphtha. The component type may relate to the type of material contained in the component contained in the feedstock. The waste stream type may relate to the waste stream or the end products included in the waste stream such as mixed plastics waste, specific end product waste, e.g., tires waste or foam waste, post-consumer waste, pre-consumer waste or the like., The waste stream fraction type may relate to the sorted waste stream to be recycled by chemical, physical and/or mechanical recycling. Biomass type or renewable type may relate to the source material such input material stream(s) are based on e.g. vegetable oil from food production, oil from specific location, or food waste from municipal waste.

In another embodiment the property data includes at least one property of the feedstock relating to at least one origin, at least one condition relating to the generation of the feedstock, at least one environmental attribute, and/or at least one allocation scheme. Origin may relate to a supplier or provider of the one or more input material stream(s). Origin may relate to a location the one or more input material stream(s) are sourced from. Condition relating to the generation of the feedstock may relate to process conditions such as production and/or recycling process used to generate the feedstock or process conditions of such production and/or recycling process used to generate the feedstock. Environmental attribute may relate to any property relating to environmental impact of the feedstock and/or the generation of the feedstock. Allocation scheme allocation schemes may specify the allocation of property data according to segregated allocation, non-segregated allocation like book and claim, mass balance with free attribution, mass balance without free attribution or combinations thereof.

In another embodiment the property data includes one or more data set(s) relating a set of properties to a type of participant associated with the data consuming network node requesting access to the property data. The type of participant may be related to a decentral participant identifier associated with the data consuming network node requesting access to the property data. The decentral participant identifier may be provided by the data consuming network node requesting access to the property data.

In another embodiment the access element relates to authorization rules that provide access to one or more data set(s) of the property data depending on a type of participant associated with the data consuming network node requesting access to the property data. The access element may be provided for access to property data set(s) that relate to a type of participant of the production and/or recycling chain executing one or more process(es) for generating the feedstock or the component thereof. The access element may relate to authorization rules that provide access to property data set(s) depending on participant type(s). The access element may relate to authorization rules that provide access to property data set(s) depending on participant identifier. The access element may relate to authorization rules that provide access to property data set(s) depending on the decentral participant identifier. The access element may relate to authorization rules that provide access to property data set(s) to selected participants of the material chain, in particular chemical producers.

In another embodiment the one or more data consuming network node(s) are associated with one or more chemical producer(s) attributing the at least one property of the feedstock or the component thereof to output material(s) produced by the chemical production network. Such attribution may include accessing and gathering the property data as disclosed herein, registering the property data by way of balancing account(s) and assigning registered properties of the feedstock to output material(s) produced by the chemical production network.

In another embodiment the property data or data set(s) may be accessed by one or more participant(s) of the production or feedstock use chain, in particular the chemical producer(s), through the one or more access element(s) generated according to the methods disclosed herein. The property data may be accessed per generation stage of the feedstock by one or more participant(s) of the feedstock generation chain, in particular the feedstock and/or component producer(s). The property data may be accessed per generation stage of the feedstock from one or more participant(s) of the feedstock use chain or production chain, in particular chemical producer(s). The property data may be accessed recursively based on one or more relationship representation(s) provided by one or more participant(s) of the feedstock generation chain, in particular feedstock or component producer(s). The one or more relationship representation(s) provided by one or more participant(s) of the feedstock generation chain, in particular feedstock or component producer(s), to the decentral network may be accessed recursively by one or more participant(s) of the feedstock use chain or production chain, in particular chemical producer(s).

### Brief description of the drawings

In the following, the present disclosure is further described with reference to the enclosed figures.
- Fig.1: illustrates an example embodiment of a circular material loop including material participants connected through a decentral network with decentral network nodes associated with material participants.
- Fig. 2: illustrates an example method for generating an access element for monitoring the production of the feedstock or components thereof by at least one material participant of the decentral network.
- Fig. 3: illustrates another example method for generating an access element for monitoring the production of the feedstock or components thereof by at least one material participant of the decentral network.
- Fig. 4: illustrates an example of a method for accessing property data related to the production of the feedstock or the component thereof by one or more data consuming network node(s) under control of a data providing network node associated with the producer of the feedstock or the component thereof.
- Fig. 5: illustrates a method for of obtaining property data related to the production of the feedstock or the component thereof based on decentral product identifier(s) and relationships.
- Fig. 6: illustrates relationship representations specifying relationships between feedstock or a component thereof and components used to produce the feedstock or the component thereof.
- Fig. 7: illustrates an example of a decentral network including several decentral network nodes which may be accessed by a computing device.
- Fig. 8: illustrates an example system for obtaining property data related to the production based on a decentral plastic article identifier.
- Fig. 9: illustrates an example of a method or apparatus for providing property data via a decentral network.
- Fig. 10: illustrates schematically an example of balancing or attributing feedstock properties to output materials of the chemical production network.

### Detailed description

The following embodiments are mere examples for implementing the method, the apparatus, the system or applications disclosed herein and shall not be considered limiting.

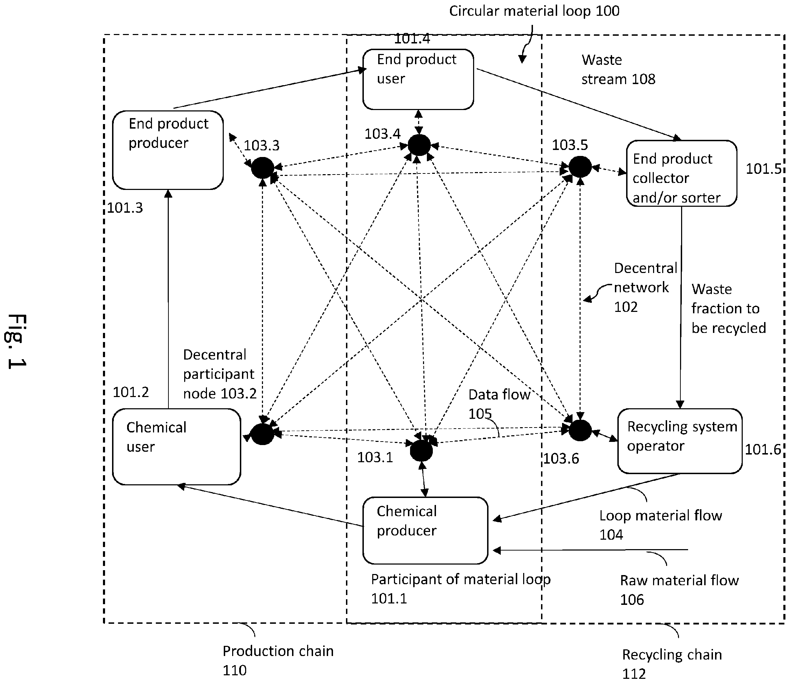

Fig. 1 illustrates an example embodiment of a circular material loop 100 including mate-rial participants 101.1-6 connected through a decentral network 102 with decentral net-work nodes 103.1-6 associated with material participants 101.1-6.

The participant network shown in Fig. 1 may be a material chain network. The material chain network may include one or more linear material chain(s), such as production chain(s) and/or recycling chain(s). The linear material chain(s) may include one or more material production chain(s), in which the material is produced by a material producer 101.1 and used to produce an end product by an original equipment manufacturer 101.3 (OEM). The linear material chain(s) may include a material recycling chain, in which the produced end product is collected, sorted and recycled up to a recycling system operator 101.6 and the recyclate is used to produce new material by the material producer 101.1. The material chain may include one or more production and/or recycling chain(s). The material chain may include one or more connected production and/or recycling chain(s). One or more linear material chain(s) may be connected to the material loop 100.

The material chain network may include a material loop network 100 including the use of recycled material(s) to produce new materials. One or more material loop(s) 100 may allow to use materials resulting from recycling of end-of-life products to produce new products, such as chemical products or materials, associated with one or more material chain(s). The material chain network, preferably the material loop 100, may include the production, use and/or recycling of physical materials or products produced by using such materials or containing such materials. The product may be a material, a chemical product, an intermediate chemical product, a discrete component containing material, a discrete component assembly, an end product, an end-of-life product, a product to be recycled, a recycled product or a recyclate.

Material or chemical product may refer to a chemical compound, a chemical ingredient, a chemical molecule, a chemical composition, a chemical mixture, a chemical formulation, an intermediate chemical product, or a chemical base material that may be used to produce discrete products. Chemical material or product flows may include non-discrete material flows that may be further processed to produce discrete products or components. Chemical material or product flows may include liquids, pellets, beats, powders or the like. The discrete product may include the discrete component, the discrete component assembly, the end product, the end-of-life product, the product to be recycled, or the recycled product.

The chemical material or product may be produced using raw materials and/or recyclate. The recyclate may refer to a mechanically or chemically recycled material. Recyclate or recycled material flows may include non-discrete material flows that may be further processed to produce new materials or chemical products. Recyclate or recycled material flows may include liquids, pellets, beats, powders or the like. The raw materials may include or refer to starting materials used to produce the material or chemical product, such as virgin raw material(s). Virgin raw material may be unused raw material that has not been subjected to any processing other than for its production.

End product may refer to a product that is the result of a material chain. End product may refer to a product that is used by the end product user. End-of-life (EOL) product may refer to a product that has been used by end product user. End-of-life product may refer to a product that does no longer fulfill the requirements for its use. End-of-life product may refer to a product that is no longer required. End-of-life products may be products disposed in waste, such as plastic waste. A recycled product may refer to any product or material that has been produced using end-of-life product(s). A recycled product may refer to a new product or material that has been produced using end-of-life product(s).

The material loop 100 illustrated in Fig. 1 may include multiple participants 101.1-6 forming the material loop 100. The material loop 100 may include all stages of the material from production of the material via use of the material to re-use of the material. The material may hence flow in a closed loop from production of constituents, the end product via use to re-use. Re-use may include re-purposing of the end-of-life product, re-furbishing of the end-of-life product and/or recycling of the end-of-life product to refeed recyclate into material production.

The participant(s) 101.1-6 of the material loop may be associated with the production of any material or product and/or recycling of any material or product. The participant(s) of the material loop 100 may include the chemical product producer 103.1, the chemical product user 103.2, the original equipment manufacturer, OEM 103.3, the end product user 103.4, the EOL product collector and/or sorter 103.5, the recycling system operator 103.6 or combinations thereof. The participant(s) may include various participant(s) of the material chain or loop not shown in Fig. 1.

The participant(s) 101.1-6 of the material loop 100 may be connected through material flow(s) 104. The material flow 104 may correspond to the flow of product or material from one participant 101.1-6 of the material loop to the downstream participant 101.1-6 of the material loop 100. The material flow 104 may refer to a continuous or a discontinuous flow of product or material. The flow of product or material may include any means of transportation suitable to transport the product from one participant 101.1-6 to another downstream participant 101.1-6. The means of transportation may include pipes, containers, barrels, packages or the like. The material flow 104 may be a one-sided flow, such as a directional material flow 104. The material flow 104 may flow from the up-stream participant 101.1-6 to the downstream participant 101.1-6 of the material loop 100, such as the material flow 104 from the recycling system operator 101.6 to the chemical product producer 101.1. The material flow may include reverse material flow 104 from the downstream participant 101.1-6 to the upstream participant 101.1-6 of the material loop 100. For example, material may flow 104 from the chemical product producer 101.1 to the recycling system 101.6, e.g. when the recycled product or recyclate does not adhere to quality specifications and needs further treatment.

The material flow 106 may be associated with raw materials used to produce the material or chemical product, such as virgin raw material(s). Virgin raw material may be unused raw material that has not been subjected to any processing other than for its production. Instead of virgin raw material(s) the material flow 104 may include recycled material(s). Recycled material(s) may be made from waste material that can be recycled. The raw and recycled materials may be provided to the chemical product producer for producing material(s), chemical product(s) and/or intermediate chemical product(s) (not shown).

The material loop 100 illustrated in Fig. 1 is based on the example of feedstocks for chemical production networks and their circular loop. Feedstocks for chemical production networks may include any type of feedstock entering chemical production networks. The feedstock may include raw materials used to produce the material or chemical product, such as virgin raw material(s). The feedstock may refer to fossil or non-fossil feedstock. Examples for fossil feedstock are crude oil, naphtha, methane or the like. The feedstock may include alternative feedstocks or non-fossil feedstocks such as recycled, bio-based or renewable feedstock. Examples for recycled feedstock are pyrolysis oil, pyrolysis gas, mechanically recycled polymer material or chemically recycled polymer material. Examples for bio-based or renewable feedstock are bio-based pyrolysis oil, bio-based pyrolysis gas, bio-based synthesis gas, bio-based hydrogen, bio-based naphtha, bio-based methane, bio-based ethane, bio-based propane, bio-based chemicals, renewable pyrolysis oil, renewable pyrolysis gas, renewable synthesis gas, renewable hydrogen, renewable naphtha, renewable methane, renewable ethane, renewable propane or renewable chemicals or any combinations thereof.

The material participants may include the chemical producer 101.1, the chemical user 101.2, the end product producer or original equipment manufacturer 101.3, the end product user 101.4 such as the retailer or the consumer, the waste collector and/or sorter 101.5, the recycling system operator 101.6.

The virgin raw materials may be provided to the chemical producer 101.1 as virgin feedstock. Alternatively or additionally, non-fossil feedstock such as recycled, bio-based and/or renewable materials may be provided to the chemical producer as feedstock. The chemicals may be produced by the chemical producer using the fossil and/or non-fossil feedstock. The chemicals may be provided to a chemical user 101.2. The chemicals may be used to produce any intermediate product. Any intermediate product may be provided to the end product producer 101.3 (Original Equipment Manufacturer - OEM). The end product may be produced using any intermediate produced upstream. The end product may be provided to the end product user. The end product may be used by the end product user 101.4. At the end-of-life, the end product may be disposed by the user. The disposed end product may be provided to the end product collector and/or sorter 101.5. The disposed end product may be collected in a waste stream 108. The waste stream 108 may be sorted. The waste stream 108 may be provided to the end product sorter 101.5 for sorting fractions of end products to be recycled. The sorted fractions of end products may be provided to a recycler 101.6 for re-cycling the end product fraction. The recycled fraction may be provided to the chemical producer 101.1 for producing new chemicals thus closing the material loop 100. The material flow 104 may close the loop between the material participants 101.1-6. The material loop may include multiple production chains 110 including material supplier (not shown), chemical producer 101.1, chemical user 101.2 and end product producer 101.3. The material loop may include multiple recycling chains 112 including end product collector 101.5 and/or sorter, recycling operator 101.6 and chemical producer 101.1.

In addition to the connection through material flows 104, the material participants 101.1-6 of the circular material loop 100 may be connected through data flows 105 via the decentral network 102. The decentral network 102 may include one or more decentral network nodes 103.1-6 associated with material participants 101.1-6 of the material loop 100. In a decentralized or decentral network 102, the decentral network nodes 103.1-6, in contrast to a centralized network, do not exclusively rely on a central network node. In other words, no single entity is the sole authority of the network. The decentral network 102 may include decentral and central network nodes. The decentral network 102 may include central network nodes that may control and/or monitor the decentral network nodes 103.1-6. For example, central network node(s) may provide authentication information, which allow at least two decentral network nodes 103.1-6 to establish a peer-to-peer communication channel between respective decentral network nodes 103.1-6.

The network nodes 103.1-6 may be computing nodes. The computing node may be any device or system that includes at least one physical and tangible processor, and a physical and tangible memory capable of having thereon computer-executable instructions that are executed by a processor. Computing nodes are now increasingly taking a wide variety of forms. Computing nodes may, for example, be handheld devices, monitoring systems, control systems, laptop computers, desktop computers, mainframes and/or data centers. The memory may take any form and depends on the nature and form of the computing node. The decentral network nodes 103.1-6 may be connected via a wired and/or wireless connection such as one of Ethernet, USB, LAN, WLAN and the like. Wireless communication may use, for example, WLAN, Wi-Fi, cellular, and/or Blue-tooth. The decentral network nodes 103.1-6 may be configured to perform peer-to-peer data transactions, illustrated by the arrows 105 indicating data flow.

The decentral network nodes 103.1-6 may be configured as data consuming and/or providing network nodes. The decentral network nodes 103.1-6 may be configured to provide data to other network node(s) of the decentral network 102 and/or to consume data from other nodes of the decentral network 102. For instance, the decentral network node 103.1,3 associated with the chemical producer 101.1, chemical user 101.2 or the end product producer 101.3 may be configured to provide data related to the production of the respective components to downstream participants such as the plastic waste collector or sorter 101.5 or the recycling system operator 101.6. Further for instance, the decentral network node 103.5,6 associated with the plastic waste collector or sorter 101.5 or the recycling system operator 101.6 may be configured to access data from the network node 103.1-5 associated with upstream participants such as the chemical producer 101.1 or the end product producer 101.3.

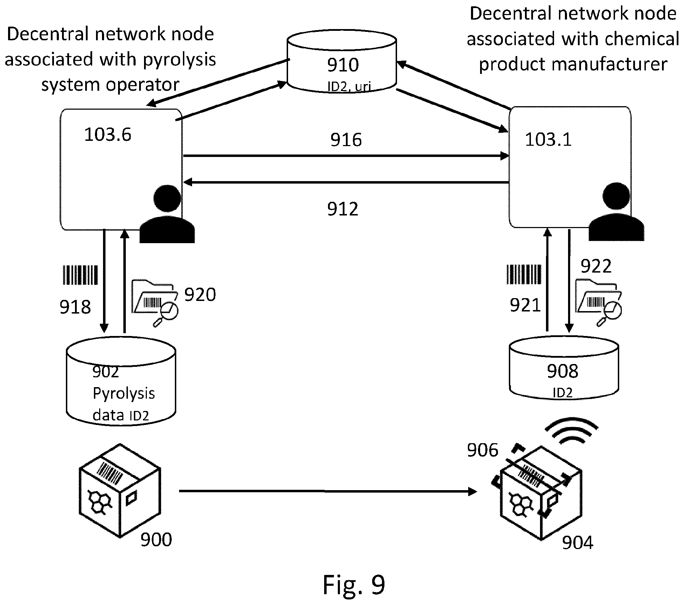

The decentral network node(s) 103.1-6 may comprise computer-executable instructions configured to provide, consume and/or process data, such as property data associated with the chemical, intermediate or end product produced or processed within the circular loop 100. The network node(s) may run a data providing service configured to provide data to another decentral network node 103.1-6 of the decentral network 102. The decentral network node(s) 103.1-6 configured to provide data may be associated with a data owner or a data generating node associated with a material or product produced or processed within the circular loop 100. The decentral network node(s) 103.1-6 may be connected to one or more dedicated data storage(s) storing the data associated with material or product produced or processed in the circular loop 100 (see for example Fig. 9). The dedicated data storage(s) may be under control of the data owner or data generating node associated with the material or product produced or processed in the circular loop 100. The data owner may be the respective participant 101.1-6 of the circular loop 100, the data generating node 103.1-6 is associated with. The data generating node 103.1-6 may have access to the dedicated data storage(s). Access to data associated with material or product produced or processed within the circular loop 100 may hence be under control of the data owner the respective decentral network node 103.1-6 is associated with. This allows to retain full control over data associated with material or product produced or processed within the circular loop 100 by the data owner. At the same time this enables sharing of data associated with material or product produced or processed within the circular loop 100 under controlled conditions, for ex-ample by using appropriate protocols including authorization and authentication mechanisms or schemes to establish peer-to-peer communication.

The decentral network node 103.1-6 configured to consume data may comprise computer-executable instructions for accessing and/or processing data within the decentral net-work 102, such as data associated with material produced or processed within the circular loop 100 and provided by a decentral data providing network node 103.1-6. The decentral data consuming network node 103.1-6 may be controlled or owned by or associated with any upstream or downstream participant of the circular loop 100. For instance, the decentral data consuming network node 103.4 may be associated with end product user 103.4 to allow access to property data associated with the supplied chemical through the decentral data providing network node 103.1 associated with the chemical producer 101.1.

The decentral network 102 may include further decentral network nodes 103.1-6. The further decentral network nodes 103.1-6 may not be associated with further participants of the circular loop 100. The further nodes may be decentral infrastructure service nodes (not shown in Fig. 1). The decentral infrastructure service nodes may provide services for decentral participant nodes 103.1-6, such as verifying the identity of the decentral network participant nodes 103.1-6 prior to performing a data ex-change. The decentral network participant node(s) 103.1-6 may be associated with or include certificate(s), such as X.509 certificate(s). The certificate(s) may be associated with an identity manager including e.g. a certificate issuing service and/or a dynamic provisioning service providing dynamic attribute tokens (e.g. OAuth Access Tokens). This way the decentral network node(s) 103.1-6 may be associated or connected to a unique identifier embedded in a X.509 certificate that identifies the respective decentral network node(s) 103.1-6. The information required to verify the certificate may be provided via an authentication registry associated with the certificate issuing service and/or a dynamic provisioning service. For instance, in the IDSA Reference Architecture Model, Version 3.0 of April 2019, a decentral data providing network node associated with the data owner, a Certification Authority (CA), a Dynamic Attribute Provisioning Service (DAPS) and a decentral data consuming network node associated with the data consumer are used to verify the identity prior to performing a data exchange (not shown).

The material or product produced by participant(s) 101.1-6 of the circular loop 100 may be associated with material or product data associated with properties of the material or product produced by participant(s) 101.1-6 of the circular loop 100. The material or product data may be provided for access by the decentral data providing network node 103.1-6 associated with the material or product producer. Access to the material or product data may be controlled by the decentral data providing network node 103.1-6. The material or product data may be accessed by decentral data consuming network node(s) 103.1-6 associated with further participants 101.1-6 of the material loop 100, such as any upstream or downstream participant 101.1-6.

The data flow 105 between decentral network nodes 103.1-6 may be directly or indirectly associated with the material flow 104, 106 between the participants 101.1-6 of the material loop 100. For instance, the data flow 105 may be directly associated with the material flow 104, 105, if data associated with a chemical product provided from the chemical product producer 103.1 to the chemical product user 103.2 is accessed by a decentral data consuming network node 103.1-6 associated with said chemical product user 101.2. For instance, the data flow 105 may be indirectly associated with the material flow 104, 106, if data associated with a chemical product produced by chemical product producer 103.1 is accessed by a decentral data consuming network node 103.1-6 associated with the recycling system operator 101.6.

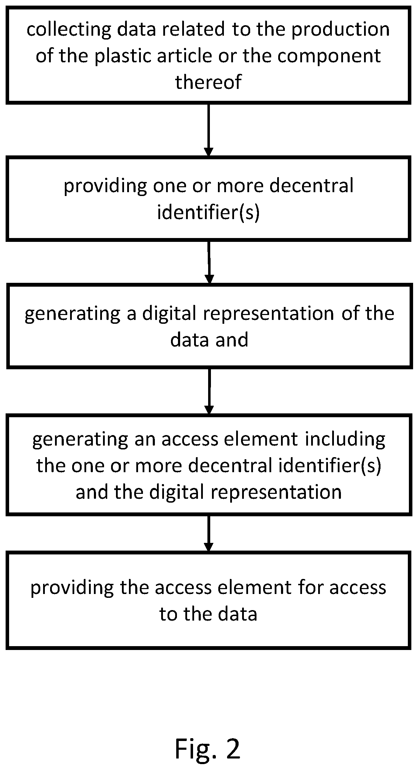

Data transactions between decentral network nodes 103.1-6 may be based on a decentral identifier associated with the material or product data to be accessed. The decentral identifier may be associated with the physical entity of the material or product. The de-central identifier may be uniquely associated with the physical entity of the material or product. The decentral identifier may uniquely identify the material or product within the decentral network 102. The decentral identifier may be associated with further decentral identifier(s), such as decentral identifier(s) of material(s) or product(s) used to produce the end product. This may allow to track the material(s) or product(s) used to produce a product, such as an end-product. The decentral identifier may be included in a material access element associated with the material or product as is described in more detail in the context of Figs. 2-9.

In particular, the generation of access elements associated with data related to the production of the feedstock or the component thereof at each stage of the production chain allow for monitoring material flows through the decentral network. Such monitoring by providing access to property data related to the production of the feedstock or the component thereof will be described in more detail by way of examples in the following Figs. 2-9.

Fig. 2 illustrates an example method for generating an access element for monitoring the feedstock or components thereof in the production and/or recycling chain by at least one material participant of the decentral network.

Data related to the production, of the feedstock or the component thereof may be collected. The data may be collected prior to, during and/or after production and/or recycling of the feedstock or the component thereof. The component may include any discrete or non-discrete component produced by any material participant of the production and/or recycling chain such as recyclate, waste fraction, waste product, end product or any intermediate product used to produce the end product. The feedstock may refer to the material entering the production chain at the chemical producer. The feedstock may include fossil feedstock such as virgin raw material or alternative, non-fossil feedstock such as recyclate, bio-based material or renewable material. The component may refer to any stage in the recycling and/or production chain. The production chain may include stages such as fossil raw material, non-fossil raw material e.g. bio-based, recycled and/or renewable feedstock to produce the chemical, intermediate material or component, discrete component or discrete component assembly for producing the end product and/or the production of the end product. The recycling chain may include stages such as recyclate, the production of recyclate, waste fractions, waste products and/or end products to be recycled. The lifecycle chain of the end product may be part of the production and/or recycling chain.

The data may be generated in association with one or more network nodes 103.1-6, e.g. in relation to data generating node(s), associated with the respective participant 101.1-6. The data may relate to different stages of the production and/or recycling chain of the feedstock. The data may relate to the production of the chemical product, the use of the chemical product in production of any intermediate product, the production of the end product. The data may relate to the recycling of the end product, any component of the end product, the sorting of waste streams, the recyclate production of waste fractions. The data may be specific to components or individual entities or batches of the produced or recycled entities.

The data related to the generation of the feedstock or any component thereof may include property data. The property data may relate to properties of the feedstock or any component thereof. The property data may relate to or specify the material composition of the feedstock or any component thereof. For example, the material composition data may relate to or specify the composition of the end product or any component thereof, the waste stream, the waste fraction sorted from the waste stream or the recyclate produced from the waste fraction. Such data may be accessed by participants of the recycling and/or production chain, such as sorters, collectors, recyclers and/or chemical producers prior, on and/or after processing, such as sorting, collecting, recycling and/or producing, to determine the composition of the feedstock. This way the feedstocks entering the chemical production network may be monitored reliably.

Depending on the feedstock, the property data may relate to, and are not limited to, end product e.g. end product type, end product use or end product application, component e.g. component type, component use or component application, material used for end product or component, waste product or component, waste stream, biomass type, renewable type, origin, and/or environmental attribute.

For recycled feedstock, the property data may relate to the end product or any component of the end product. This may include end product type, use and/or application, component type, use and/or application. For example, the end product may be food product in plastic packaging. The recycled feedstock may be recycled from the plastic packaging. The end product type may by food product, the component may be the packaging, the type of end product may be food product, the use of the component may be packaging for food, the application of the plastic used to produce the packaging may be the film.

For bio-based or renewable feedstock, the property data may relate to the raw material used to generate the feedstock, the waste the feedstock is generated from, the waste stream the feedstock is generated from, the origin of the raw materials or waste. Raw materials may include, and are not limited to, agricultural waste, manure, municipal waste, plant material, sewage, green waste, food waste, natural occurring fats, natural occurring oils, mixtures of natural occurring fats and oils, cooking oil, or animal fats. The biomass type may relate to the origin of the biomass, such as the producer of the biomass, the geolocation of the biomass, the habitat of the biomass, the consumer of the biomass, or combinations thereof and may not be limited thereto. For example, in the case of bio-naphtha as feedstock type the biomass type may specify oils and fats from plants (vegan). Further for example, in the case of biogas as feedstock the raw material type or the biomass type may specify generated from municipal waste.

The waste stream types may be linked to recycled feedstock. The waste stream types may relate to one or more waste materials or waste categories. Waste categories may include, and are not limited to, non-synthetic waste such as animal waste, vegetable or wooden waste, or synthetic waste, such as textile waste, paper waste, plastics waste, or rubber waste. The waste stream types may relate to the origin of the waste, such as the end-of-life product, the producer of the end-of-life product, the geolocation of the end-of-life product, the habitat of the end-of-life product, the consumer of the end-of-life product, or combinations thereof and may not be limited thereto. For example, in the case of recycled feedstock such as pyrolysis oil, the waste type may specify plastics waste from tires. mixed plastics waste from packaging or mixed plastics waste from ocean cleanup.

Similar to the examples above other property data for fossil and other non-fossil feedstock may be specified.

The data related to the generation of the feedstock or any component thereof may include decentral identifier(s) associated with one or more production/recycling input(s) used to produce the feedstock or the component thereof. The data may relate to one or more production/recycling input(s) used to generate the respective feedstock in the production and/or recycling chain. Collecting data related to the generation of the feedstock or any component thereof may include gathering decentral identifier(s) associated with one or more production/recycling input(s) used to generate the feedstock or the component thereof. The decentral identifier(s) associated with one or more production/recycling input(s) used to generate the feedstock or any component may be collected by reading an identifier element, such as a bar code or QR code, connected to the production/recycling input(s).

The data may include further property data such as a performance property, a chemical property, such as flammability, toxicity, acidity, reactivity, heat of combustion or the like, and/or a physical property such as density, color, hardness, melting points, boiling points, electrical conductivity or the like.

By collecting the data related to the generation of the feedstock or any component thereof per production and/or recycling stage of the product and/or recycling chain, digital twins of the respective entities produced by one or more production or recycling participant(s) of the production or recycling chain may be generated. This way the entities from end product to recyclate may be tracked in the material production and/or recycling chain.

The data related to the generation of the feedstock or any component thereof may be stored in a dedicated storage associated with the respective participant of the production and/or recycling chain producing the feedstock or component thereof. The data related to the generation of the feedstock or any component thereof may include different data sets related to the production or recycling. Such data sets may refer to the data sets described above such as parts of the property data.

One or more decentral identifier(s) associated with the generated feedstock or the component thereof may be provided. The one or more decentral identifier(s) may be uniquely associated with the physical entity of the generated feedstock or a component thereof. The one or more decentral identifier(s) may be uniquely associated with any entity produced by any participant of the production and/or recycling chain. The one or more decentral identifier(s) may comprise any unique identifier uniquely associated with the feedstock or component thereof, the production participant(s) of the production chain producing the entity, the recycling participant(s) of the recycling chain recycling the entity and/or the data related to the generation of the feedstock or the component thereof. The decentral identifier may include or relate to one or more Universally Unique identifiers) (UUID) or a Digital Identifier(s) (DID). Via the decentral identifier(s) and the unique association with the feedstock or component thereof, the data access to the data may be controlled by the participant such as the producer or recycler. This contrasts with central authority schemes, where identifiers are provided by such central authority and access to data is controlled by such central authority. Decentral in this context refers to the usage of the identifier in implementation as controlled by the data owner.

The decentral identifier(s) may include one or more identifier(s) used in the decentral network and allowing for data exchange or peer-to-peer communication via the decentral network. Data exchange may include discovery of the decentral identifier for participant nodes of the decentral network, authentication of participant nodes of the decentral network and/or authorization of data transfers via the peer-to-peer communication between participant nodes of the decentral network. The decentral identifier(s) may be as-sociated with any participant of the production chain and the respective entity produced by such participant.

One or more digital representation(s) of the data related to the production and/or recycling of the feedstock or the component thereof may be generated. The digital representation may be generated per data set included in the data related to the generation of the feedstock or the component thereof. The digital representation(s) may point to the collected data or parts thereof. The digital representation(s) may relate to the dedicated storage associated with the participant of the production and/or recycling chain generating the feedstock or any component thereof and storing the data related to the generation of the feedstock or the component thereof. The digital representation(s) may include a locator or pointer locating or pointing to the dedicated storage associated with the participant of the production and/or recycling chain generating the feedstock or component thereof and storing the data related to the generation of the feedstock or the component thereof. The digital representation may include one or more digital link(s) pointing to data related to the generation of the feedstock or the component thereof. The digital representation(s) may include a locator or pointer, such as am url or uri, to a dedicated storage address associated with the participant of the production and/or recycling chain generating the feedstock or component thereof and storing the data related to the generation of the feedstock or the component thereof. The digital representation may comprise at least one interface to a data providing network node or a data providing service. The digital representation may include at least one interface to a data consuming network node or a data consuming service. It may include an endpoint for data exchange or sharing (resource endpoint) or an endpoint for service interaction (service endpoint), that may be uniquely identified via the data transaction protocol. The digital representation(s) pointing to the collected data or parts thereof may be uniquely associated with the decentral identifier. The decentral identifier may be connected to the digital representation of the collected data or parts thereof.

An access element including the one or more decentral identifier(s) and the one or more digital representation(s) may be generated. The access element may include or be associated with the digital representation(s) of the collected data or parts thereof related to the generation of the feedstock or the component thereof. The access element may be associated with the feedstock or the component thereof. The digital representation of the collected data or parts thereof may be provided to the data consuming network node or the data consuming service. The digital representation(s) of the collected data or parts thereof may be provided by a decentral network database, a database associated with the data consuming network node, the data providing network node associated with the participant generating the respective entity or combinations thereof. The digital representation may include the locator or pointer for accessing the collected data or parts thereof. The access element may include or be associated with the digital representation of the collected data or parts thereof related to the generation of the feedstock or the component thereof, and the decentral identifier. The access element may include or be associated with the digital representation of the collected data or parts thereof related to the generation of the feedstock or the component thereof, the decentral identifier and authentication information.

The access element may include one or more authentication mechanism(s) associated with the decentral identifier(s) and the digital article representation(s). The one or more authentication mechanism(s) may be associated with or linked to decentral identifier(s), such as decentral participant identifier(s), decentral feedstock identifier(s), decentral component identifier(s), decentral waste stream identifier(s) or decentral end product identifier(s). The one or more authentication mechanism(s) associated with the decentral identifier(s) may be accessible by the decentral participant network node(s). The digital access element may further relate to authorization information linked to the decentral identifier(s). The authorization information may be associated with the decentral identifier(s) and the digital representation(s). The authorization information may include access rules depending on the data set to be accessed and the role of the accessing data consuming network node.

The access element may be provided for access to the data related to the generation of the feedstock by one or more data consuming network node(s) under control of a data providing network node associated with the participant generating the plastic article or the component thereof. The access element may be provided to a decentral registry node, for example as described further below. Decentral registry node may store decentral access element(s).

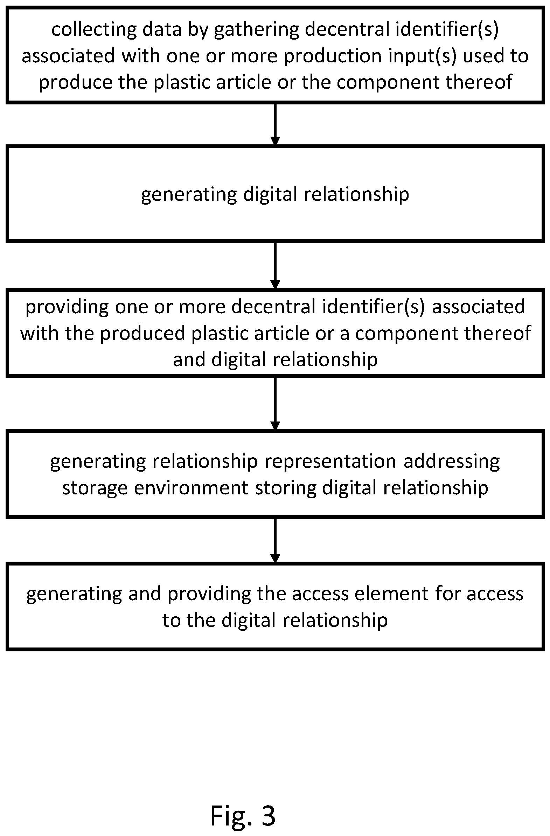

Fig. 3 illustrates another example method for generating an access element for monitoring the generation of the feedstock or components thereof by at least one material participant of the decentral network.

Data may be collected as described in the context of Figs. 1 or 2. Collecting data related to the generation of the feedstock or the component thereof may include gathering decentral identifier(s) associated with one or more production/recycling input(s) used to generate the feedstock or the component thereof. The decentral identifier(s) associated with one or more production/recycling input(s) used to generate the feedstock or the component thereof may be collected by reading an identifier element, such as a bar code or QR code, connected to the production/recycling input(s).

One or more decentral identifier(s) associated with the generated feedstock or any component thereof may be provided and one or more digital representation(s) of the data related to the generation of the feedstock or the component thereof may be generated as for example described in the context of Fig. 1. The data related to the generation of the feedstock or the component thereof may include at least one data set relating to or including the decentral identifier(s) associated with one or more production/recycling input(s) used to generate the feedstock or the component thereof. Based on the decentral identifier(s) associated with one or more production/recycling input(s) used to produce the feedstock or the component thereof and decentral identifier(s) associated with the generated feedstock or a component thereof a digital relationship may be generated. For example, the decentral identifier(s) associated with the generated feedstock or a component thereof may be a parent identifier(s) and the decentral identifier(s) associated with one or more production/recycling input(s) used to generate the feedstock or the component thereof may be the child identifier(s). Generating the digital representation may include generating a relationship representation based on the decentral identifier(s) associated with one or more production/recycling input(s) used to generate the feedstock or the component thereof. The relationship representation may include one or more digital link(s) pointing to data related to relationship between input and feedstock or component thereof. A decentral relationship identifier associated with the digital relationship may provided. The providing may include providing the relationship representation.

The access element including the one or more decentral identifier(s) and the digital representation(s) may be generated and provided as described in the context of Fig. 1. In addition, a relationship access element including the decentral relationship identifier associated with the digital relationship and the relationship representation may be generated. The relationship access element may include the decentral relationship identifier and the relationship representation. Access elements may be provided to one or more access element management node(s) configured to provide access elements or parts thereof on request of data consuming network nodes.

The relationship access element may be provided for access to the digital relationship between the feedstock or the component thereof and the production/recycling input(s) by one or more data consuming network node(s) under control of a data providing network node associated with the participant generating the feedstock or the component thereof. The relationship access element may be provided to a decentral registry node, for example as described further below. Decentral registry node may store access element(s) associated with the feedstock and relationship access element(s).

By way of the relationship access elements per stage of the production and/or recycling chain, the material flow may be recursively accessed for monitoring material flow by accessing respective data packages. The property data may include one or more data set(s) relating to any entity of the production and/or recycling chain contributing to the generation of the feedstock or any component, such as end product and its components, waste products, waste streams, sorted or collected waste fractions or the like. Such properties may be provided prior, on and/or after generation of the feedstock or component thereof and may be accessed recursively in a targeted manner, e.g. depending on decentral participant ID. Such recursive access may be provided to specific participants of the material production and/or recycling chain to protect sensitive recipe data or bill of material data of producers or recylers. The recursive access via relationship IDs and representations is described in more detail below.

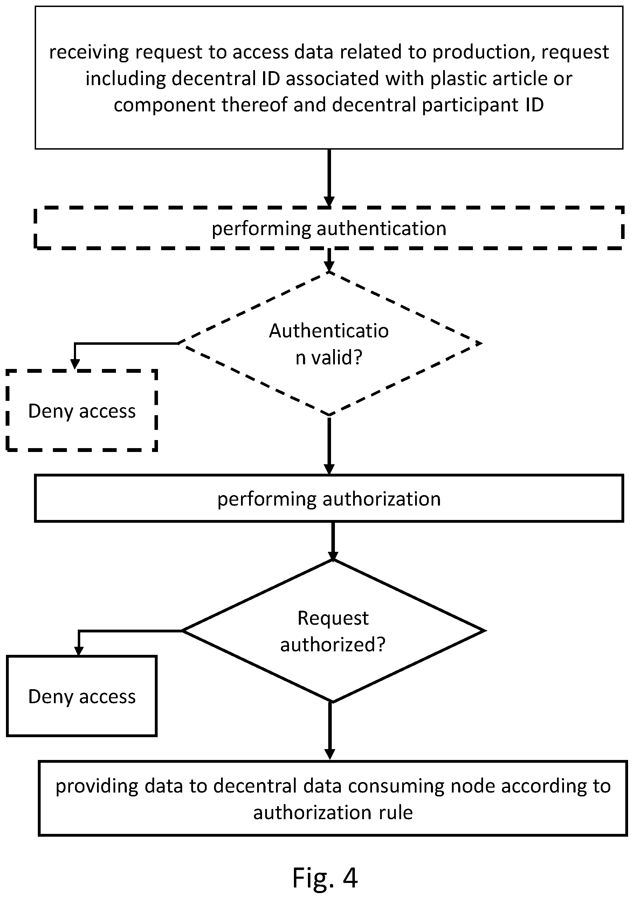

Fig. 4 illustrates an example of a method for accessing data related to the generation of the feedstock or the component thereof by one or more data consuming network node(s) under control of a data providing network node associated with the participant generating the feedstock or any component thereof.

The data related to the generation of the feedstock or the component thereof, such as property data, may be accessed by a decentral data consuming network node in communication with the decentral network node receiving an indication to gather data related to the generation of the feedstock or the component thereof, in particular property data. The access may be requested at a decentral data providing network node being associated with a storage environment storing the data related to the generation of the feedstock or the component thereof, in particular property data, as described in the context of Figs. 2 and 3.

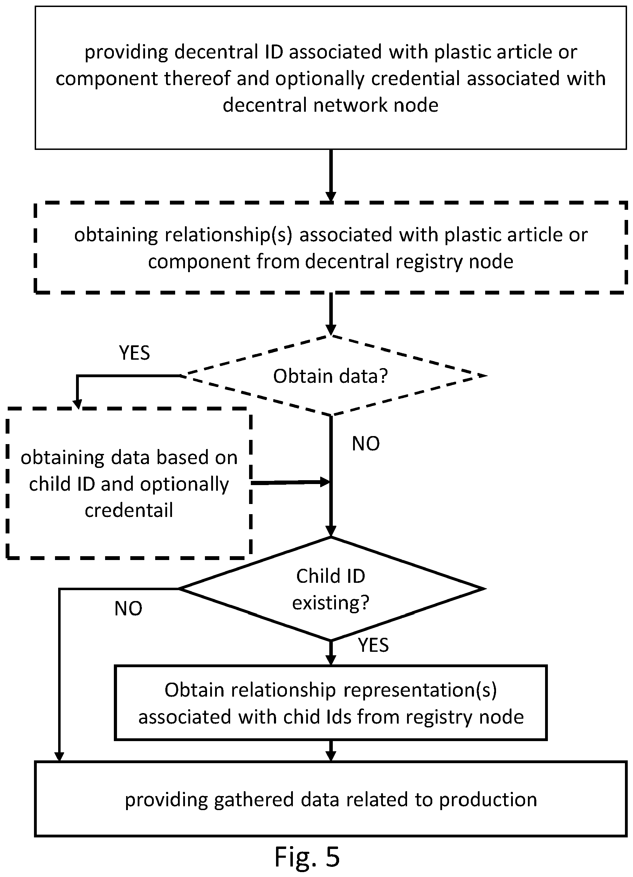

The decentral data providing network node may receive an indication to access the data related to the generation of the feedstock or the component thereof, in particular property data, associated with a determined decentral identifier. The decentral identifier may be determined as described for example in more detail below in the context of Figs. 5-8 based on the relationship representation.

Before access may be provided to the data related to the generation of the feedstock or the component thereof, in particular property data, the request may be authenticated. In particular, the decentral network node requesting to access the data related to the generation of the feedstock or the component thereof and/or the decentral data providing network node providing access to the data related to the generation of the feedstock or the component thereof may be authenticating. Such authentication may be based on the decentral identifiers associated with the decentral network nodes. The decentral identifiers may be associated with authentication mechanisms or identity tokens, such as a device certificate (X.509v3), a TLS connection certificate (X.509v3) and a 'Dynamic Attribute Token' (OAuth Access Token). The decentral network node requesting to access the data may be associated with any participant of the recycling chain such as collector, sorter, recycler or any combination thereof. The decentral data providing network node providing access to the data may be associated with any participant of the production and/or recycling chain.

If the authentication fails, access to the data related to the generation of the feedstock or the component thereof, in particular property data, may be denied. If the authentication is valid, an authorization step may follow. Such authorization may be based on the decentral identifier associated with the decentral network nodes and the authorization rules associated with the data related to the generation of the feedstock or the component thereof, in particular property data. Authorization rules may be associated with access to and/or usage of the data related to the generation of the feedstock or the component thereof, in particular property data. Authorization rules may include access rules associated with decentral identifier(s) of the decentral network nodes controlling access to the data related to the generation of the feedstock or the component thereof, in particular property data.

If the authorization fails, access to the data related to the generation of the feedstock or the component thereof, in particular property data, may be denied or access may be adapted. In particular, the authorization as requested may be adapted to be in line with the applicable authorization rules. If the authorization is valid, access to the data related to the generation of the feedstock or the component thereof, in particular property data, may be granted according to the authorization rules as requested. The provided data related to the generation of the feedstock or the component thereof, in particular property data, may be stored in a storage environment associated with the decentral network node requesting access to the data related to the generation of the feedstock or the component thereof, in particular property data.

Fig. 5 illustrates a method for of obtaining data related to the generation of the feedstock or the component thereof based on decentral product identifier(s) and relationships. The method may be implemented in a decentral network, for example as described in the context of Figs. 1 to 4.

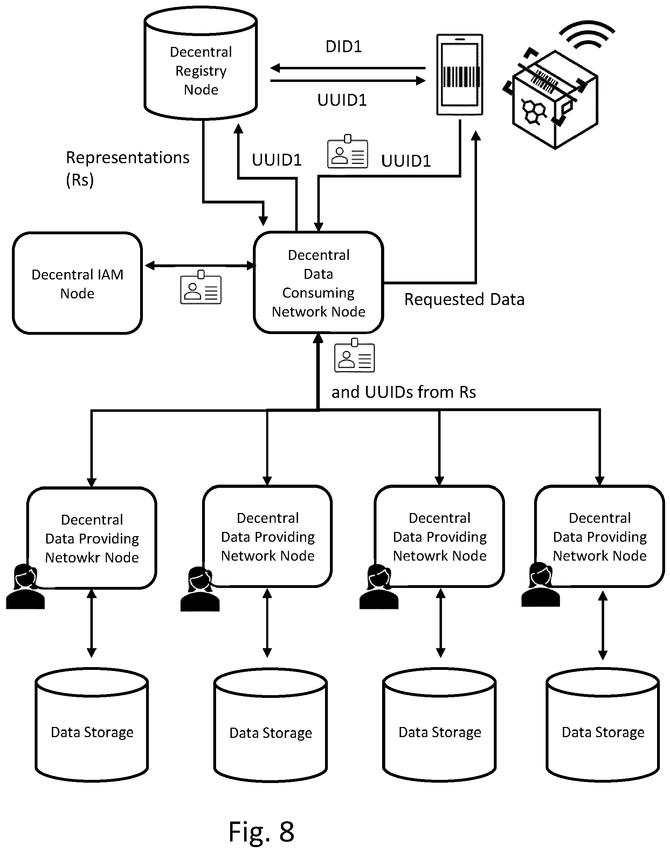

A decentral identifier associated with a decentral network participant may be provided to the decentral network node providing access to data e.g. of the end product producer or the recycler of the material chain as for example illustrated in Fig. 1. The decentral network participant may be a participant of the production and/or recycling chain. The decentral network participant may be any participant of the material loop illustrated in the example of Fig. 1, e.g. including production and recycling chain. The decentral identifier associated with a decentral network participant requesting access may include a string and/or numbers. The decentral identifier associated with the decentral network participant requesting access may be associated with authentication schemes, such as a private-public key scheme. Use of a decentral identifier associated with a decentral network participant requesting access allows to improve security with respect to access of data related to the generation of the feedstock or the component thereof, since access to data related to the generation of the feedstock or the component thereof may be restricted and only defined decentral network participants may be allowed to access such data, for example as illustrated in the context of Fig. 8. The decentral identifier associated with a decentral network participant requesting access may be provided to a decentral identity management access node of the decentral network. The decentral identity management access node may be configured to perform authentication steps with the provider of the decentral participant identifier. The decentral identity management access node may provide an access token, if authorization is performed successfully. This access token may be presented to the decentral network node providing access to data. Authentication ensures that gathering of data related to the generation of the feedstock or the component thereof using the decentral network node requesting access can only be initiated by authenticated decentral network participants. This allows to improve security since it avoids that complete bill of material trees for any material entity of the material chain which may contain sensitive data with respect to supply chain information is obtained by unauthenticated entities.

The decentral network node requesting access may obtain data related to relationship representation(s) based on the decentral identifier(s) associated with the feedstock, one or more component(s) of the feedstock or combinations thereof provided for the decentral registry node.

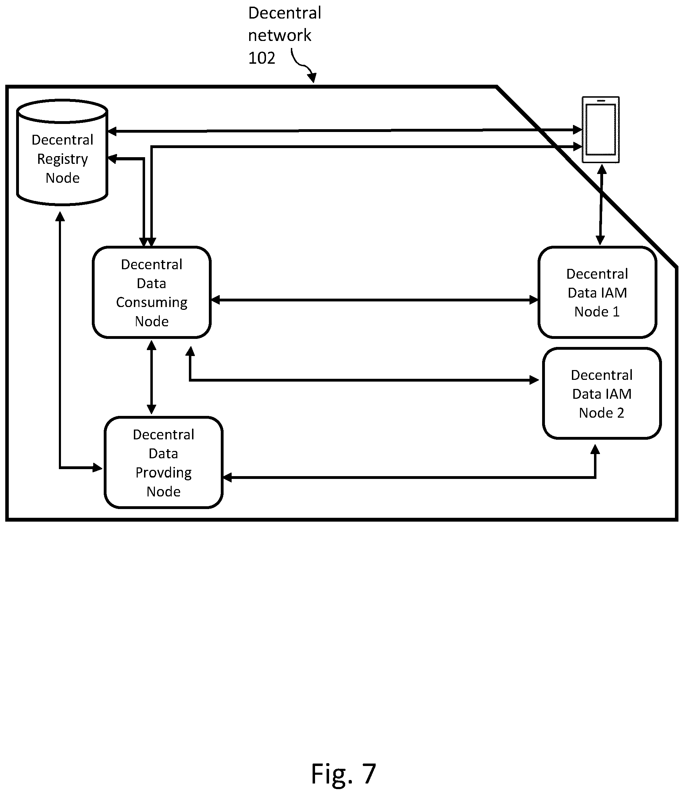

The decentral registry node may store decentral identifier(s) associated with data related to respective relationship representations as for example described in the context of Fig. 3. Relationship representations or the equivalent digital relationships are, for example, illustrated in Fig. 7.

The decentral network node requesting access may access said decentral registry using the decentral identifier(s) associated with the feedstock or the component thereof to determine data related to relationship representation(s) associated with said decentral identifier(s). Data related to the relationship representation may include a decentral relationship representation identifier and a relationship representation pointing to the respective digital relationship. The relationship representation pointing to the digital relationship may comprise at least one interface to a decentral data providing network node associated with said digital relationship. It may further include at least one interface to the decentral data consuming network node being associated with said digital relationship. It may include an endpoint for data exchange or sharing (resource endpoint) or an endpoint for service interaction (service Endpoint), that is uniquely identified via a communication protocol. The relationship representation(s) pointing to the digital relationship may hence be uniquely associated with the decentral relationship identifier and the decentral identifier associated with the feedstock or the component thereof. The relationship representation pointing to the digital relationship may be regarded as locator indicating the location or dedicated data storage(s) where the respective digital relationship is stored.

The digital relationship(s) may specify relationship(s) between the feedstock and components thereof and production/recycling inputs, such as materials, used to generate the feedstock or the component thereof. The digital relationship may be directly or indirectly associated with the decentral identifier associated with the feedstock or component thereof. This allows to determine the respective digital relationship(s) using the decentral identifier associated with the feedstock or component thereof. The digital relationship(s) may specify that the production/recycling input, such as input components, was used to generate the feedstock or the component thereof and/or that the feedstock or the component thereof was generated using the input components. The digital relationship may be associated with a relationship between the feedstock or the component thereof and each production/recycling input, such as input component, used to produce the feedstock or the component thereof, for example using the decentral identifier associated with the feedstock and component identifier(s) associated with production/recycling inputs, such as input components, used to produce the feedstock or the component thereof. Hence, such relationship may also specify raw materials and intermediate products used in the generation of the feedstock or the component thereof. The digital relationship may be associated with the relationship between input material(s) and output material(s) of a single production step or stage of the production chain. The digital relationship may be associated with the relationship between input material(s) and output material(s) of a single recycling step or stage of the recycling chain. Such relationship may be linked to mirror the whole production and/or recycling chain. Examples of digital relationships which may be used to determine the decentral component identifier(s) are, for example, illustrated in Fig. 7. Determining decentral identifier(s) associated with the feedstock or components thereof using the digital relationship may allow to construct a bill of material tree structure for the feedstock or components thereof.

The decentral network node requesting access to data may be configured to access relationship(s) based on the data related to the digital relationship(s) retrieved from the decentral registry node. The decentral network node may be in communication with a decentral data consuming network node configured to access digital relationship(s) and data related to the production of the feedstock or the component thereof, such as property data. The digital relationship(s) may be accessed from decentral data providing network node(s) associated with a storage environment storing the respective relationship. The decentral data providing network node may be associated with the owner of the data. The decentral data providing network node may be associated with any participant of the production and/or recycling chain, such as the end product producer or the end product collector, sorter or recycler. The digital relationship may include the decentral feedstock identifier and one or more decentral component identifier(s) associated with production input(s), such as input components, used to generate the feedstock (denoted as child identifier(s) hereinafter).

Decentral child identifier(s) associated with the decentral feedstock identifier may be determined based on the obtained digital relationship(s). The decentral feedstock identifier may be regarded as decentral parent identifier. The decentral child identifier(s) may correspond to component identifier(s) associated with materials used to generate the feedstock or component thereof. The relationship may contain one or more decentral child identifier(s). The relationship may include the decentral feedstock identifier. This allows to link the decentral feedstock identifier to respective child identifier(s).

It may be determined whether to obtain data associated with the decentral child identifier(s) depending on the decentral child identifier having further child identifiers. For example, if the child identifier(s) are associated with property data, data may be obtained. If the child identifier(s) are not associated with property data, no data may be obtained. The determination may be made based on data provided to the decentral network node. For instance, data associated with a defined data set (also called asset hereinafter) may be provided and this data may be used to determine whether to retrieve further data or not. The data set may relate to property data. The property data may include one or more data set(s) relating to decentral participant identifier associated with the data consuming network node requesting access to the property data. Based on such information provided to the registry node and/or the data providing network node, it may be determined if data is to be provided. If property data is to be obtained, the method obtains data. Otherwise, it proceeds to check for decentral child identifiers.

Data related to generation of feedstock, such as the property data may be obtained based on the determined decentral child identifier(s). The data related to generation, such as the property data may be obtained from decentral data providing network nodes associated with said data related to feedstock generation. Respective decentral data providing network nodes may be determined by the decentral network node using the determined decentral child identifier(s). For instance, the decentral child identifier(s) may be associated with a digital representation pointing to the data related to feedstock generation or parts thereof. Said digital representation may correspond to an endpoint address associated with a respective decentral data providing network node. The digital representation may be stored on the decentral registry node and may be determined using the decentral child identifier(s) determined before. The digital representation may be used to access the data related to feedstock generation at the decentral data providing network node associated with said digital representation. The decentral data providing network node may be associated with a storage environment storing the data related to feedstock generation or parts thereof. The decentral data providing network node may be associated with a data owner of the data related to feedstock generation. The decentral data providing network node may be associated with the participant generating the feedstock or component thereof. Data exchange may be performed after respective authentication and authorization processes. Authorization may be based on the decentral participant identifier. For instance, the decentral data providing network node may determine whether the data related to feedstock generation may be accessed using authorization or access rules associated with the provided decentral participant identifier. The accessed data related to production may be transferred to and stored in a storage environment associated with the decentral network node requesting access to said data.

It may be determined whether relationships of determined decentral child identifier(s) are existing. For this purpose, the decentral network node requesting data may access the decentral registry node and may determine whether relationship representation(s) associated with the determined decentral child identifier(s) is existing in said registry. If this is the case, the method proceeds to determine child identifier(s). If this is not the case, the method proceeds to access and obtain data.

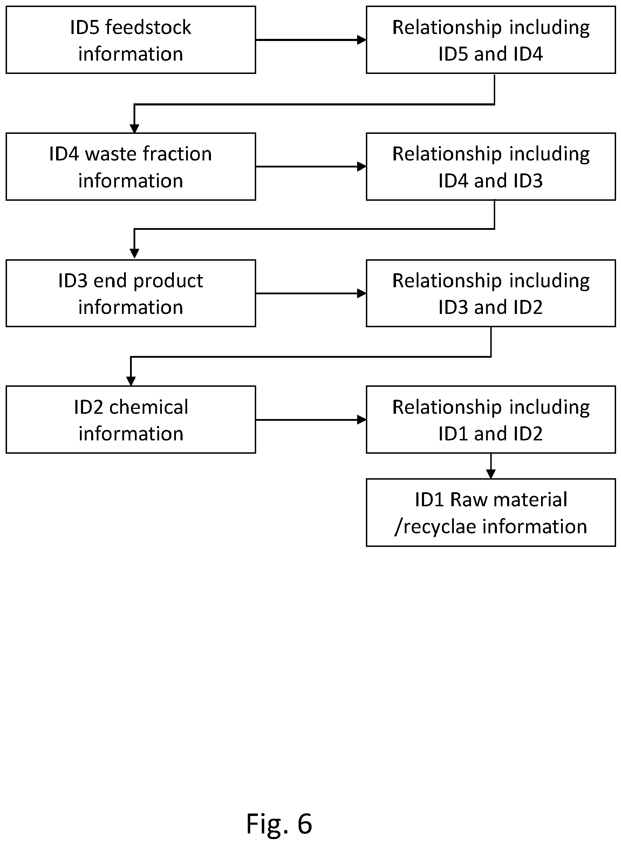

Data related to relationship representation(s) associated with determined decentral child identifier(s) may be obtained from the decentral registry network node as described above. The relationship representation(s) may be used to access associated digital relationship(s) as described above. The decentral child identifier(s) determined may be regarded as decentral parent identifier(s). The method may return to such determination and repeat the steps using the decentral child identifier(s) determined until no further decentral child identifier(s) are existing, e.g. until the leaf nodes of the bill of material tree (see for example Fig. 6) are reached. Recursively determining decentral child identifier(s) associated with a decentral material identifier allows to obtain the complete bill of material tree structure associated with a feedstock or component thereof, e.g. allows to determine the relationships between input components used to generate the feedstock or the component thereof.

In the last step, the data related to the generation, such as property data, gathered may be provided. Gathered data may include all data related to feedstock generation gathered based on child identifiers from different participant network nodes. The gathered data related to feedstock generation may be provided to a storage environment associated with network node requesting data. The network node requesting data related to feedstock generation may be a part of the decentral network, e.g. may be a decentral data consuming network node.

Fig. 6 illustrates relationship representations specifying relationships between feedstock or component thereof and input components used to produce the feedstock or the component thereof.

In this example, the feedstock is recycled feedstock such as pyrolysis oil. The digital twin (DT) of the feedstock may include the digital relationship containing the decentral digital twin identifier ID5 and a decentral identifier ID4 associated with the waste fraction used to produce the feedstock. The digital relationship may be associated with data related to the relationship. Said data may be used by the decentral network node to gather the relationship representation from the decentral data consuming network node associated with said relationship representation (e.g. associated with a storage environment storing said relationship representation) as described in the context of Fig. 5. The data related to the relationship representation may include a decentral relationship identifier and a relationship representation pointing to said digital relationship. The data related to the relationship may be associated with data related to the digital twin. Data related to the digital twin may include the decentral digital twin identifier and relationship representation pointing to the digital twin with digital relationships or parts thereof. Data related to the digital twin may further include decentral identifier(s) associated with data set(s) contained in the digital twin and respective relationship representations pointing to said data set(s) or parts thereof. One such data set may correspond to the relationship based on the decentral identifiers.

Similarly, the digital twin (DT) of the waste fraction may include a relationship containing the digital twin identifier ID4 and a decentral identifier ID3 associated with the end product used to produce the waste fraction. The digital twin (DT) of the end product may include the digital relationship containing the decentral digital twin identifier ID3 and a decentral identifier ID2 associated with the chemical used to produce the end product. Lastly the chemical may include a relationship to the raw material/recyclate ID1 used to produce the chemical.

Based on the digital relationships shown in Fig. 6 part of a bill of material tree may be obtained from the relationship representations as described above. The bill of material tree may include the feedstock as input material to the chemical production network at the top level down to the raw material/recyclate as input material to produce the chemical that was used for the end product on the bottom level. To not expose the full bill of material to one participant, the property data including one or more data set(s) relating to different sets of properties of the feedstock may be accessed in a controlled manner based on the decentral participant identifier as described in the context of Figs. 3 and 5.

Fig. 7 illustrates an example of a decentral network including several decentral network nodes which may be accessed by a computing device. The computing device may be a mobile computing device, such as a laptop, a smartphone, a tablet or the like. The computing device may be a stationary computing device, such as a desktop computer or the like. The computing device may comprise a screen configured to display information provided by the decentral network. For instance, the screen may display a graphical user interface displaying the data received via the decentral network.

The decentral network may be a decentral peer-to-peer communication network. The decentral network may include decentral network nodes associated with participants of the feedstock ecosystem and may be configured to perform data transactions. The plastic article ecosystem may include the production chain. The feedstock ecosystem may include the recycling chain. The network nodes associated with participants of the feedstock ecosystem may be associated with raw chemical product suppliers, intermediate chemical products manufacturers, intermediate part manufacturers, component manufacturers, component assembly manufacturers, end product manufacturers and participants of the recycling chain as described for example in the context of Fig. 1. The end product production may include supply chains for producing the materials used to produce plastic articles. The renewable or bio-based feedstock production may include supply chains for producing the renewable or bio-based feedstock from e.g. agricultural waste, manure, municipal waste, plant material, sewage, green waste, food waste, natural occurring fats, natural occurring oils, mixtures of natural occurring fats and oils, cooking oil, or animal fats. The feedstock recycling may include recycling chains for collecting, sorting and/or recycling the materials used to produce end products and generating recycled feedstock from such end products.

The data transactions may be based on a transaction protocol including authentication and/or authorization mechanism(s). Based on the authentication and/or authorization mechanism(s) a peer-to-peer communication between decentral participant network nodes associated with participants of the feedstock ecosystem may be established. The one or more authentication mechanism(s) may be associated with or linked to decentral identifier(s), such as decentral feedstock identifier(s), decentral component identifier(s) and/or decentral end product or waste product identifier(s). The one or more authentication mechanism(s) associated with the decentral identifier(s) may be accessible by the decentral participant network node(s).

Decentral network nodes associated with participants of the feedstock ecosystem may include decentral data providing network nodes. Decentral data providing network nodes may be configured to provide data, such as property data, upon a request to access this data. The data may be provided upon successful authentication and authorization, for example as described in the context of FIG. 4. The decentral data providing network nodes may be associated with a data owner of the property data, for example as described in the context of Figs. 2 to 6. Such decentral network nodes associated with participants of the feedstock ecosystem may include decentral data consuming network nodes, such as decentral network node. Decentral data consuming network nodes may be configured to request access to data, such as property data or material data, at respective decentral data providing network node(s). Decentral data consuming network nodes may be configured to access data pointing to the respective property data, such as the decentral feedstock identifier/decentral component identifier/decentral end product or waste product identifier and associated digital representations pointing to the property data, from decentral registry node. Decentral registry node may be configured to store decentral identifiers associated with respective digital representations pointing to data or part(s) thereof. Access to said data allows decentral data consuming network nodes to determine the decentral data providing network node associated with the data to be obtained. For instance, decentral data consuming network node(s) may access decentral registry node with the decentral feedstock identifier associated with the feedstock or part thereof or the decentral component identifier associated with the component of the feedstock and may retrieve respective digital representations pointing to the respective property data.

The decentral network nodes may include decentral infrastructure nodes. Such infrastructure nodes may not be associated with participants of the feedstock ecosystem. Such infrastructure nodes may provide services to participants of the feedstock ecosystem. For instance, such infrastructure nodes may be configured to provide authentication services for decentral network nodes, such as decentral IAM network nodes. Decentral IAM network nodes may be configured to provide identity and access management services for decentral network nodes and/or for computing devices requesting data from the decentral network. For instance, decentral IAM network node(s) may be configured to generate access tokens to authorized decentral network node(s) and/or computing devices and to provide such access tokens to the decentral network node or computing device requesting said tokens. Such access tokens may be used during authentication processes. In another instance, such infrastructure nodes may be configured to gather data upon receiving a request from a computing device, such as computing device (e.g. decentral network node). In yet another instance, such infrastructure nodes may serve as a repository storing data available to one or more decentral network nodes, such as decentral registry node.

The decentral configuration allows for more efficient use of computing resources, strengthens control by the data owners of the decentral network and enable targeted data sharing.

Fig. 8 illustrates an example system for obtaining property data based on a decentral feedstock identifier as described for example in the context of Figs. 4-7.

The feedstock or component thereof may be associated with a digital twin. The digital twin of the feedstock or component thereof may include the decentral feedstock identifier and data related to production/recycling, such as property data. Data related to production/recycling may include the data structure described for example in the context of Fig. 2. The digital twin of the component may include the decentral component identifier and data related to production/recycling, such as property data. The data related to production/recycling may include property data relating to waste composition for recycling of the end product or component thereof.

A digital access element may be generated prior, upon or after production and/or recycling of the feedstock or component thereof. The digital access element may be associated with the respective digital twin or a part thereof. The digital access element may contain a decentral access element identifier and access data. The decentral access element identifier may correspond to or be associated with the decentral feedstock identifier or the decentral component identifier. The access data may include digital representation(s) pointing to the respective digital twin or a part thereof. The access data may include or relate to relationship representation(s) pointing to the respective digital relationship(s) or a part thereof. Examples of digital access element generation are illustrated in Figs. 2 and 3. The digital access element may further include or relate to authentication and/or authorization information linked to the decentral access element identifier. The authentication and/or authorization information may be provided for authentication and/or authorization of the decentral network node, decentral data consuming network nodes and/or decentral data providing network nodes. The digital access element may be provided to a decentral registry node, for example as described in the context of Figs. 2, 3, 6 or 7. Decentral registry node may store decentral access element identifier(s) and associated access data.

The feedstock or the component thereof may be provided in association with the digital access element to a company performing at least one production step of a chemical production process, such as described in the context of Fig. 1. The company may perform the production step to produce chemicals from feedstock or recyclate produced waste streams. The feedstock may be connected to an identifier element, such as a bar code or QR-code, having encoded the decentral access element identifier. The production company receiving the feedstock may read the code through a code reader. The code reader may be a smartphone running a code reading application, such as a QR code reader app. The data obtained by the code reading application may be used to determine the decentral access element identifier (denoted hereinafter as DID1). The data obtained by the code reading application may be used to determine the decentral feedstock identifier or decentral component identifier (hereinafter denoted as UUID1). The data obtained by the code reading application may be used to determine the end product/component identifier(s). The data obtained by the code reading application may be used to determine the access data. The decentral access element identifier, decentral feedstock identifier or decentral component identifier and access data may be determined by code reader. For instance, the decentral access element identifier determined by the code reader may be a DID and the code reader may be configured to retrieve the associated DID document containing the decentral feedstock identifier or decentral component identifier and the access data, for example using a DID resolver. In another instance, the feedstock identifier/component identifier is determined by code reader and used to retrieve the decentral access element identifier and associated access data, for example from decentral registry node. Hence, code reader may be configured to retrieve the digital access element containing the decentral access element identifier and access data from decentral registry node. Code reader may be configured to perform an authentication step with decentral registry node. For instance, code reader may access a decentral IAM network node and decentral IAM network node may be configured to provide an access token to code reader upon successful authentication. This access token may be used by code reader to access decentral registry node. Code reader may provide a decentral participant identifier associated with a participant of the feedstock ecosystem to decentral IAM network node for authentication.

Code reader may be configured to provide the decentral feedstock identifier/decentral component identifier (e.g. UUID1) to decentral network node. Code reader may be configured to provide authentication data, such as a decentral participant identifier and optionally authentication data, such as an access token, to decentral network node.

Decentral network node may be configured to verify the authentication data received from computing device with decentral IAM network node. Upon successful authentication, decentral network node may be configured to access decentral registry node using decentral product identifier/decentral recycled material identifier received from computing device and to retrieve data related to relationship representation(s) associated with the decentral feedstock identifier/decentral component identifier. Data related to a relationship representation may include a decentral relationship representation identifier and a relationship representation pointing to the respective digital relationship. The relationship representation pointing to the digital relationship may point to the decentral data providing network node associated with the respective digital relationship. For instance, the data related to the relationship representation associated with the feedstock may comprise a relationship representation pointing to decentral data providing network node(s) associated with property data of the components or production inputs used to produce the feedstock. In another instance, the data related to the relationship representation associated with the component may comprise a relationship representation pointing to a decentral data providing network node associated with the property data of the component or production input(s) used to produce the component. Decentral network node or a decentral data consuming network node associated with any participant of the production and/or recycling chain, such as the chemical producer, may be configured to access respective decentral data providing network node(s) associated with the relationship representation(s) and to request relationship representation(s) associated with the decentral relationship representation identifier(s) from said decentral data providing network node(s), for example as illustrated in Fig. 7. Examples of relationship representations are illustrated in Fig. 6. Decentral network node may be configured to determine decentral material identifier(s) contained in said relationship representation(s), for example as described in the context of Fig. 5. Decentral network node may be configured to access decentral registry node using the determined decentral child identifier(s) to determine access data associated with said decentral child identifier(s). Decentral network node may be configured to access property data using the decentral article/component identifier, the access data and optionally the decentral participant identifier provided by computing device from respective decentral data providing network node(s). Decentral network node may be configured to determine data related to relationship representation(s) associated with the determined decentral feedstock/component identifiers as described previously.

In this example, decentral network node may receive a decentral feedstock identifier associated with the feedstock from computing device. The decentral network node may access decentral registry node using said decentral feedstock identifier to determine data related to relationship representation(s) associated with the decentral article identifier. The determined data related to relationship representation(s) may contain a relationship representation pointing to a decentral data providing network node associated with digital relationship. The digital relationship may be stored on a storage environment associated with the decentral data providing network node. The digital relationship may include a relationship indicating decentral component identifier(s) associated with component(s) used to produce the feedstock, such as the plastic or bio-based waste fractions, etc. Decentral network node or a decentral data consuming network node associated with decentral network node may be configured to access the digital relationship from the decentral data providing network node. Decentral network node or a decentral data consuming network node associated with decentral network node may be configured to access material configuration data from the decentral data providing network node. Access to the material configuration data may be authorized based on the decentral participant identifier provided by computing device. Access to the material configuration data may be controlled by the decentral data providing network node associated with said property data. This ensures that property data can only be accessed by authorized participants of the feedstock ecosystem, hence avoiding uncontrolled access to the property data.

Decentral network node may be configured to retrieve decentral component identifier(s) associated with component(s) used to produce the feedstock, such as the plastic waste fraction, the bio-based waste fraction, the crude oil for refining, etc. from the accessed digital relationship. Decentral network node may be configured to access data related to relationship representation(s) associated with said decentral component identifier(s) from decentral registry node using the determined decentral component identifier(s). Decentral network node or the decentral data consuming network node may be configured to access digital relationship(s), for example from decentral data providing network node associated with material configuration data. The property data may be stored in a storage environment (DT storage 1) associated with the decentral data providing network node. DT storage may be associated with or under control of the component producer. Decentral network node or the decentral data consuming network node may be configured to access property data as described previously. The property data set(s) may relate to recycling of waste fractions by recycling process, e.g. by the chemical recycling process.

Decentral network node may be configured to retrieve decentral component identifier(s) associated with end product waste streams used to produce the component, from the accessed relationship representation. Decentral network node may be configured to access data related to relationship representation(s) associated with said decentral component identifier(s) from decentral registry node using the determined decentral component identifier(s). Decentral network node or the decentral data consuming network node may be configured to access digital relationship(s), for example from decentral data providing network node associated with property data. The property data may be stored in a storage environment (DT storage) associated with the decentral data providing network node. DT storage may be associated with or under control of the waste stream collector and/or sorter. Decentral network node or the decentral data consuming network node may be configured to access property data as described previously. The property data set(s) may relate to the waste streams such as collecting and/or sorting process of end products included in the waste streams.

The same procedure may be performed per component of the feedstock used to produce the feedstock. Hence, decentral network node may be configured to determine, based on the accessed digital relationship (s) and the linking between decentral identifier(s) of starting components and resulting components/feedstock, a bill of material tree associated with the feedstock or the component thereof. The bill of material tree may represent relationships between all components used to generate the feedstock or component thereof e.g. up to the end product. Recursive determination of decentral component identifier(s) using digital relationship(s) hence allows to obtain a property data of components(s) used to generate the feedstock or component thereof and indicating specific to the feedstock or component thereof.

The property data gathered by decentral network node may be provided to computing device. Computing device may display the gathered property data, for example within a graphical user interface.

Fig. 9 illustrates an example of a method or apparatus for providing material composition and/or article history data via a decentral network 102.

The feedstock 900 as provided by the feedstock producer may be provided in association with the access element as described for example in the context of Figs. 2, 3 or 4-8. The access element may relate to the feedstock identifier. The feedstock identifier may include one or more decentral identifier(s). The decentral identifier may be an identifier in the decentral network 102 allowing for data exchange via the decentral network 102. Data exchange may include discovery of the decentral identifier for decentral network node(s) 103 associated with participant(s) 101 of the decentral network 102, authentication of decentral network node(s) 103 associated with participant(s) 101 of the decentral network 102 and/or authorization of data transfers via a peer-to-peer communication between decentral network node(s) 103 associated with participant(s) 101 of the decentral network 102.

The access element may include or be related to data related to the feedstock such as feedstock property data associated with the feedstock properties like composition, origin, recycling type aso. The access element may include a digital representation of the property data associated with the article 900. The access element may further include or relate to authentication and/or authorization information linked to the feedstock identifier. The authentication and/or authorization information may be provided for authentication and/or authorization of a data providing service and/or data consuming service implemented by decentral network node(s) 103.6, 103.1. The feedstock identifier may include or relate to a decentral identifier, that is uniquely associated with the feedstock. The decentral identifier may be connected to the digital representation of the of the property data associated with the feedstock 904. The digital representation may include a representation for accessing the property data or parts thereof. The decentral identifier may include a Universally Unique IDentifier (UUID) or a Digital IDentifier (DID). The decentral identifier may include any unique identifier uniquely associated with a data owner and/or article.

The data owner may be the generator of the feedstock. Via the decentral identifier and its unique association with the data owner and/or feedstock access to the property data may be controlled by the data owner such as described in the context of Figs. 4-8.

The access element including the digital representation of property data may be stored in a decentral data base or registry node 910. The property data may be stored in a data base or dedicated storage 902 associated with the data owner, such as the recycler producing the feedstock 900.

For the production chain, the end product 904 may be physically delivered to the user using the end product. The end product 900 may be physically collected and/or sorted by the end product collector and/or sorter. The end product may be connected with a QR-code having encoded the end product identifier. The user, collector or sorter of the end product 904 may read the QR-code through a QR-code reader 906. The end product identifier may be provided to a data base 910 associated with the producer producing the end product 900. The end product 904 may be physically delivered to the user using the end product.

For the recycling chain, the feedstock 900 may be connected with a QR-code having encoded the feedstock identifier. The chemical producer using the feedstock 904 may read the QR-code through a QR-code reader 906. The feedstock identifier may be provided to a data base 910 associated with the recycling system producing the feedstock 900.

The data owner in these examples include the end product producer, any intermediate product producer producing an intermediate product for the end product, the feedstock producer, the waste stream sorter or collector, the waste fraction recycler. The data owner may comprise any entity generating data. The data generating node may be coupled to the data owner or the entity owning or producing physical products from or for which data is generated. The data may be generated by a third-party entity on behalf of the entity owning physical articles from or for which data is generated.

The data consuming service implemented by node 103.1 may comprise computer-executable instructions for accessing and/or processing data, such as property data, associated with the data owner. The data providing service implemented by node 103.6 may comprise computer-executable instructions for providing and/or processing data, such as property data, associated with the data owner for accessing and/or processing by the data consuming service implementing node 103.1.

Based on the received feedstock identifier a request to access the property data related to the property identifier may be triggered by the data consuming service implemented by node 103.1 as signified by arrow 912. The feedstock identifier may be provided to the data providing service implemented by node 103.6 associated with or of the recycler of the feedstock 900. In addition, authentication and/or authorization information may be provided. The request may be authenticated and/or authorized to access the property data related to the feedstock identifier. Based on successful authorization and/or authentication access to the property data related to the feedstock identifier may be granted.

For access the feedstock identifier may be provided to the data providing service implemented by node 103.6 as signified by arrow 912. The data providing service implemented by node 103.6 may use the received feedstock identifier to retrieve the property data associated with the feedstock 900 from a dedicated storage 902 as signified by arrows 918 and 920. The property data associated with the feedstock 904 provided to the data providing service implemented by node 103.6 may be provided to the data consuming service implemented by node 103.1 as signified by arrow 916. The property data associated with the feedstock 904 may be stored in the dedicated storage or data base 908 associated with the user of the feedstock 904 as signified by arrow 922.

Through the feedstock identifier or decentral identifier, the property data can be uniquely associated with the feedstock 900, 904. Through the decentral network the feedstock data may be transferred between the producer of the feedstock and the user of the feedstock. This way the property data can be shared with unique association to the feedstock and without central intermediary directly between the players of the decentral network 102. This allows for controlled transparency of property data across the material loop 100.

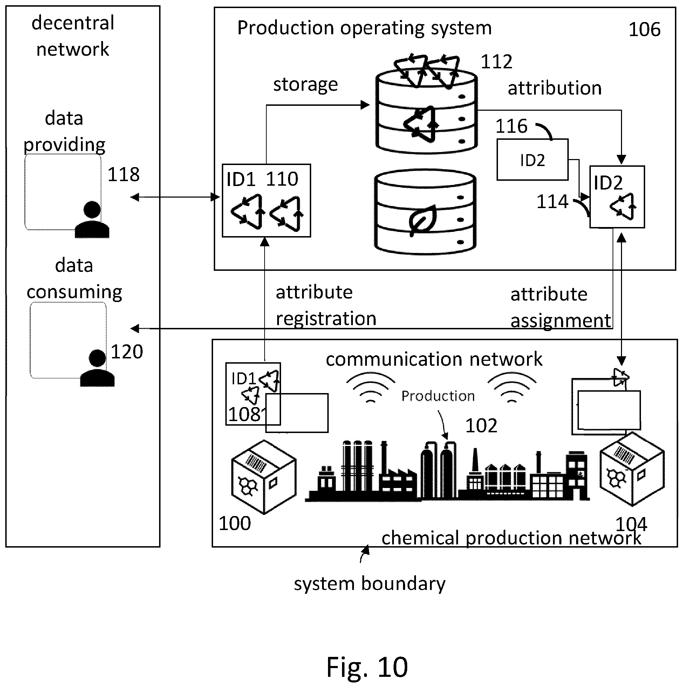

Fig. 10 illustrates schematically an example of balancing or attributing feedstock properties to output materials of the chemical production network.

For producing one or more output material(s) 104 different feedstocks or input materials 100 may be provided as physical inputs to the chemical production network 102. The physical input and output material(s) 104 may be associated with one or more properties such as those related to environmental impact. The properties such as those related to environmental impact may be digitalized in the form of environmental attributes such as recycled or bio-based content of the feedstocks or input materials. The production operating system 106 may be configured to ingest such feedstock properties and to track the properties across the chemical production network 102 from feedstocks or input materials 100 to output material(s).

The chemical production network 102 may include multiple interlinked processing steps. The chemical production network 102 may be an integrated chemical production network 102 with interrelated production chains. The chemical production network 102 may include multiple different production chains that have at least one intermediate product in common. The chemical production network 102 may include multiple stages of the chemical value chain. The chemical production network 102 may include the producing, refining, processing and/or purification of gas or crude oil. The chemical production network 102 may include a stream cracker, or a syngas plant connected to multiple production chains that output chemical products 104 from the effluent of such plants. The chemical production network 102 may include multiple production chains that output from one or more feedstock(s) 100 one or more output material(s). The chemical production network 102 may include multiple tiers of a chemical value chain. The chemical production network 102 may include a physically interconnected arrangement of production sites. The production sites may be at the same location or at different locations. In the latter case the production sites may be interconnected by means of dedicated transportation systems such as pipelines, supply chain vehicles, like trucks, supply chain ships or other cargo transportation means.

The chemical production network 102 may chemically, physically or thermally convert feedstocks or input materials 100 to one or more output material(s) 104. The chemical production network 102 may convert feedstocks 100 by way of chemical, physical and/or thermal conversion to one or more output material(s) 104.

The feedstocks 100 may be fed to the chemical production network 102 at any entry point marked by the system boundary of the chemical production network 102. The feedstocks 100 may be fed to the chemical production network 102 at the start of the chemical production network 102. Feedstocks 100 may for example make up the feedstock of a steam cracker. The feedstock 100 may include non-fossil feedstock, such as bio-based or recycled material, and/or fossil feedstock for the manufacture of chemical intermediates and chemical output material(s) 104.

The chemical production network 102 may include multiple production steps. The production steps included in the chemical production network 102 may be defined by the system boundary of the chemical production network 102. The system boundary may be defined by location or control over production processes. The system boundary may be defined by the site of the chemical pro-duction network 102. The system boundary may be defined by production processes controlled by one entity or multiple entities jointly. The system boundary may be defined by value chain with staggered production processes to an end product, which may be controlled by multiple entities separately. The chemical production network 102 may include a waste collection and sorting step, a recycling step such as pyrolysis, a cracking step such as steam cracking, a separation step to separate intermediates of one process step and further processing steps to convert such intermediates to output material(s) 104 leaving the system boundary of the chemical production network 102.

The production operating system 106 of the chemical production network 102 may be configured to monitor and/or control the chemical production network 102 based on operating parameters of the different processes. One process step monitored and/or controlled may be the feed of input materials 100 or the release of output material(s) 104. Another process step monitored and/or controlled may be the registration of feedstock properties such as environmental attributes associated with feedstocks 100 entering the system boundary of the chemical production network 102. Yet another process step monitored and/or controlled may be the attribution of properties such as environmental attributes to output material(s) 104 produced by the chemical production network 102. Yet another process step monitored and/or controlled may be the management of feedstock properties such as environmental attributes associated with feedstocks 100 and output material(s) 104 of the chemical production network 102.

The production operating system 106 may be configured to register inbound feedstock properties such as environmental attributes, to assign outbound feedstock properties such as environmental attributes. The production operating system 106 may be configured to access property data related the feedstocks 100, the processes and/or the output material(s) 104 of the chemical production network 102. For example, the production operating system 106 may be configured to register a recycled or bio-based content of the one or more feedstock(s) 100 used in the chemical production network 102 as environmental attribute. The production operating system 106 may be configured to allocate the feedstock property such as environmental attribute to at least one balancing account associated with the recycled or bio-based content of the feedstocks 100. The production operating system 106 may be configured to allocate at least a part of the feedstock property such as environmental attributes from the at least one balancing account to the at least one output material(s) 104.

The production operating system 102 may be configured to handle feedstock properties such as environmental attributes related to the input and output material(s) 100/104 of the chemical production network 102. For example, the production operating system 106 may be configured to determine feedstock properties such as environmental attributes associated with the use of input materials 100 impacting the environmental property of the chemical production network 102 and the output material(s) 104 produced by the chemical production network 102. Further in particular, the production operating system 102 may be configured to determine feedstock properties such as environmental attributes associated with the output material(s). This way the production operating system 102 may be configured to store feedstock properties such as environmental attributes in balancing accounts or to delete feedstock properties such as environmental attributes from the balancing accounts. The feedstock properties such as environmental attributes may hence be viewed as a credit that may be deposited in an account or deducted from an account related to the input and output material(s) 104 of the chemical production network 102. This way the feedstock properties such as environmental impact of the production may be tracked and/or traced.

In chemical production networks 102 multiple value chains may be linked. Additionally different input materials 100 or chemical processes impacting the environmental property of output material(s) 104 produced by the chemical production network 102 may be used. Examples of input materials 100 impacting at least one environmental property of output material(s) 104 produced from such input materials 100 are recycled, renewable or bio-based input materials 104.

Owing to the processing of chemicals in continuous or semi-continuous production and the complexity of chemical production networks 102, traceability of the feedstocks through the network may be hampered. In such scenarios, an equivalent feedstock property such as environmental attribute signifying the impact on the feedstock to the output material(s) produced by the chemical production network may be allocated to balancing accounts 122 and assigned to one or more output material(s) of the chemical production network 102. The feedstock properties such as environmental attributes may hence be decoupled from the physical material flow inside the chemical production network 102. Decoupling may be based on the mass balance model in that the equivalent amount assigned to the one or more output material(s) may not exceed the equivalent amount provided by feedstocks or processes. If an equivalent amount has been allocated to the digital account of feedstock property type such as one environmental attribute type, it may not be allocated a second time to another digital account of the prperty type. Environmental attribute types may be recycled, bio-based, renewable or the like. Environmental attributes may be provided in the form of digital assets or chemical product passports attached to the physical entity of the output material.

The chemical production network 102 and operations of the chemical production network 102 may be monitored and/or controlled by a production operating system 106. The production operating system 106 may be configured to track properties like environmental attributes from feedstocks 100 fed to the chemical production network 102 to output material(s) 104 produced by the chemical production network 102. For tracking of feedstock properties, the operating system 106 may be configured to register properties such as environmental attributes associated with the feedstock 100 provided to the chemical production network 102 and to attribute feedstock properties such as environmental attributes to output material(s) produced by the chemical production network 102.

The feedstocks 100 such as pyrolysis oil, bio-naphtha or bio-gas may be provided to the chemical production network 102. The feedstocks 100 may enter the chemical production network at the entry point, such as a such as a steam cracker or a syngas plant. The feedstocks 100 may be used in the chemical production network 102 to produce one or more output material(s) from the feedstocks 100. Output material(s) 104 may be provided at exit points of the chemical production network 102.

On entry of the feedstock(s) 100, feedstock property data 108 may be provided via a communication network to a computing interface of the production operating system 106. A data provider, such as a QR code reader, may be configured to provide material data 108 related to the one or more feedstock(s) 100 and respective properties such as environmental attributes 108 to a computing interface configured to allocate the properties such as environmental attributes associated with the feedstock(s) 100. The property data 108 may include the feedstock identifier and properties such as environmental attributes associated with the feedstock(s) 100. The feedstock identifier may be associated with the physical entity of the feedstock 100 entering the chemical production network 102. The property data may be provided on, prior or after providing of the one or more feedstock(s) at entry points to the chemical production network 102.

The feedstock identifier may be linked to the properties of the feedstock such as environmental attribute(s) associated with the respective feedstock(s) 100, the amount of feedstock 100 and/or the certificate certifying the property such as environmental attribute(s). The amount of feedstock may be a measured amount of feedstock 100 fed to a plant or storage of the chemical production network 102 for producing one or more output material(s) from the feedstock(s) 100. The feedstock identifier associated with the respective feedstock 100, the feedstock properties such as environmental attribute(s) associated with the respective feedstock(s) 100 and the amount of feedstock(s) 100 provided to the chemical production network 102 may be provided to the production operating system 106. Such data may be provided via a communication network on entry to chemical production network 102, or the data may be transferred from a computing system to the production operating system 106 such as the decentral data providing node 101.6 associated with the recycler 103.6.

An inbound allocator 110 may be configured to allocate feedstock properties such as one or more environmental attribute(s) to at least one balancing account 112 associated with the respective property such as environmental attribute. For example, one balancing account 112 may relate to environmental attributes from recycled material and another balancing account 112 may relate to environmental attributes from bio-based or renewable material. The balancing account may be associated with the respective property type such as environmental attribute type, e.g. renewable, bio-based or recycled 100. Based on such association the balancing account associated with the property type such as environmental attribute type of the respective feedstock 100 may be selected. The feedstock property e.g. environmental attributes may be allocated to the selected balancing account. For example, the account 112 for recycled material may be selected and the environmental attribute for recycled material may be allocated to such account 122.

To allocate, the feedstock properties such as one or more environmental attribute(s) may be converted to balancing units and the balancing units may be allocated to the balancing account 122. The conversion may be based on a conversion factor such as mass, weight, carbon atoms, hydrogen atoms, methane equivalents or any other suitable measure for quantifying the environmental impact of the property such as environmental attribute. The conversion factor may hence take into account the difference between producing chemical products from conventional feedstock(s) and producing chemical products from non-conventional feedstock(s) or producing chemical products from a mix of conventional and non-conventional feedstock(s). The conversion factor may relate to differences in chemical and/or physical properties of conventional and non-conventional feedstock(s).

By using the balancing accounts 112 it can be ensured that feedstock properties such as environmental attributes of feedstocks 100 are only used once for assignment to output material(s) 104. This way double counting on input or output is avoided to ensure properties such as positive environmental impact can be reliable tracked and assigned to output material(s) 104.

An identifier provider 116 may be configured to provide the plastic additive identifier associated with the output material produced by the chemical production network 102 and provided at the exit point from the chemical production network 102.

An outbound assigner 114 may be configured to assign at least one property such as environmental attribute from the at least one balancing account 112 associated with the respective property such as environmental attribute to the output material identifier ID2. Properties such as one or more environmental attribute(s) may be assigned to the at least one output material identifier ID2. Assignment may include de-allocation of the property such as one or more environmental attributes from the balancing account 112 associated with the respective property type such as environmental attribute type. Assignment may include converting one or more balancing unit(s) to the property such as one or more environmental attribute(s).

Assigning at least one environmental attribute associated with input material(s) to output material(s) may include the linking of the output material identifier ID2 with the property such as environmental attribute. The output material identifier ID2 may be associated with the physical entity of the output material. This way the digital identifier of a material may be uniquely linked to the physical material. Such linking may include a physical or virtual link of identifiers uniquely associated with the physical material. For physical linking a tag or code may be physically connected to the material, e.g., by printing a QR code on the packaging. For digital linking different identifiers associated with the physical material may be linked. For example, an order number, a batch number, LOT number or a combination thereof may be linked.

The outbound assigner 114 may be configured to provide the properties such as environmental attributes associated with the output material to a data consumer, such as a system associated with a user of the chemical or output material. The outbound assigner 114 may be configured to provide the property such as environmental attributes associated with the chemical to a decentral network as for example described in the example of Figs. 1 and 2 by generating the access element. Properties such as environmental attributes may be provided via the above ID based schema in the form of digital assets or chemical product passports associated with the physical entity of the chemical.

The present disclosure has been described in conjunction with preferred embodiments and examples as well. However, other variations can be understood and effected by those persons skilled in the art and practicing the claimed invention, from the studies of the drawings, this disclosure and the claims.

Any steps presented herein can be performed in any order. The methods disclosed herein are not limited to a specific order of these steps. It is also not required that the different steps are performed at a certain place or in a certain computing node of a distributed system, i.e. each of the steps may be performed at different computing nodes using different equipment/data processing.

The present disclosure has been described in conjunction with preferred embodiments and examples as well. However, other variations can be understood and effected by those persons skilled in the art and practicing the claimed invention, from the studies of the drawings, this disclosure and the claims.

Any steps presented herein can be performed in any order. The methods disclosed herein are not limited to a specific order of these steps. It is also not required that the different steps are performed at a certain place or in a certain computing node of a distributed system, i.e. each of the steps may be performed at different computing nodes using different equipment/data processing.

As used herein "determining" also includes "initiating or causing to determine", "generating" also includes "initiating and/or causing to generate" and "providing" also includes "initiating or causing to determine, generate, select, send and/or receive". "initiating or causing to perform an action" includes any processing signal that triggers a computing node or device to perform the respective action.

In the claims as well as in the description the word "comprising" or "including" or similar wording does not exclude other elements or steps and shall not be construed limiting to the elements or steps lined out. The indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation or further elements may be included.

Providing in the scope of this disclosure may include any interface configured to provide data. This may include an application programming interface, a human-machine interface such as a display and/or a software module interface. Providing may include communication of data or submission of data to the interface, in particular display to a user or use of the data by the receiving entity.

Any disclosure and embodiments described herein relate to the methods, the systems, apparatuses, devices, chemicals, materials, computer program elements lined out above and vice versa. Advantageously, the benefits provided by any of the embodiments and examples equally apply to all other embodiments and examples and vice versa.

All terms and definitions used herein are understood broadly and have their general meaning.

## Claims

1. A method for monitoring at least one property of one or more feedstock(s) for a chemical production network or component(s) thereof, the method comprising the steps of:
- collecting property data of the one or more feedstock(s) or component(s) thereof in relation to generation of the feedstock or the component thereof, wherein collected property data relates to one or more production and/or recycling input(s) used to produce the feedstock or the component thereof;
- providing one or more decentral identifier(s) associated with at least one property of the one or more feedstock(s) or component(s) thereof and the one or more production and/or recycling input(s);
- generating one or more access element(s) including the one or more decentral identifier(s) and the one or more digital representation(s);
- providing the one or more access element(s) to a decentral network for access to the property data by one or more data consuming network node(s) of the decentral network under control of a data providing network node, wherein the one or more data consuming network node(s) are configured to register and/or attribute the at least one property of one or more feedstock(s) or component(s) thereof to output material(s) produced by the chemical production network.

2. The method of claim 1, wherein the one or more access element(s) are configured for access to property data from one or more participant(s) of the feedstock use chain, wherein the one or more access element(s) are configured for access to property data per generation stage of the feedstock generation chain by one or more participant(s) of the feedstock use chain.

3. The method of an of the preceding claims, wherein the one or more access element(s) are configured for recursively accessing property data per generation stage of the feedstock generation chain, wherein recursive access is based on one or more relationship representation(s) provided by one or more participant(s) of the feedstock generation chain.

4. The method of an of the preceding claims, wherein the property data is collected in association with the generation of the feedstock or the component thereof by a participant of the feedstock generation chain, wherein property data associated with one or more production and/or recycling input(s) used to generate the feedstock or the component thereof, in particular the related decentral identifiers associated with the one or more production input(s), are collected.

5. The method of any of the preceding claims, wherein a relationship access element is provided for access to the digital relationship between the feedstock or the component thereof at the generation stage of the feedstock or the component thereof and the respective one or more production and/or recycling input(s) at said the generation stage.

6. The method of any of the preceding claims, wherein the property data includes at least one property of the feedstock relating to at least one material flow type including at least one feedstock type, at least one component type, at least one waste stream type, at least one waste stream fraction type, at least one biomass type or at least one renewable type.

7. The method of any of the preceding claims, wherein the property data includes at least one property of the feedstock relating to at least one origin, at least one condition relating to the generation of the feedstock, at least one environmental attribute, and/or at least one allocation scheme.

8. The method of any of the preceding claims, wherein the property data includes one or more data set(s) relating a set of properties to a type of participant associated with the data consuming network node requesting access to the property data.

9. The method of any of the preceding claims, wherein the access element may relate to authorization rules that provide access to one or more data set(s) of the property data depending a type of participant associated with the data consuming network node requesting access to the property data, wherein the access element is provided for access to property data set(s) that relate to a type of participant of the production and/or recycling chain executing one or more process(es) for generating the feedstock or the component thereof.

10. The method of any of the preceding claims, wherein the one or more data consuming network node(s) are associated with one or more chemical producer(s) attributing the at least one property of the feedstock or the component thereof to output material(s) produced by the chemical production network.

11. An apparatus for monitoring at least one property of one or more feedstock(s) for a chemical production network or component(s) thereof, the apparatus comprising:
- a data collection interface configured to collect property data of the one or more feedstock(s) or component(s) thereof in relation to generation of the feedstock or the component thereof, wherein collected property data relates to one or more production and/or recycling input(s) used to produce the feedstock or the component thereof;
- decentral identifier provider interface configured to provide one or more decentral identifier(s) associated with at least one property of the one or more feedstock(s) or component(s) thereof and the one or more production and/or recycling input(s);
- an access element generator configured to generate one or more access element(s) including the one or more decentral identifier(s) and the one or more digital representation(s);
- a decentral network interface configured to provide the one or more access element(s) to a decentral network for access to the property data by one or more data consuming network node(s) of the decentral network under control of a data providing network node, wherein the one or more data consuming network node(s) are configured to register and/or attribute the at least one property of one or more feedstock(s) or component(s) thereof to output material(s) produced by the chemical production network.

12. A method for registering and/or attributing at least one property of a feedstock entering a chemical production network, the method comprising the steps:
- providing one or more decentral identifier(s) associated with one or more feedstock(s) to be fed to the chemical production network;
- gathering based on one or more access element(s) generated and/or provided according to the methods of any of claims 1-11 or by the apparatuses of claim 12 property data from a producer of the one or more feedstock(s) to be fed to the chemical production network and/or one or more producer(s) of component(s) of the one or more feedstock(s) to be fed to the chemical production network;
- registering at least one property of one or more feedstock(s) entering the chemical production network based on the gathered property data; and
- providing at least one registered property of the one or more feedstock(s) or component(s) thereof for attributing the at least one property to output material(s) produced by the chemical production network.

13. An apparatus for registering and/or attributing at least one property of a feedstock entering a chemical production network, the apparatus comprising:
- an identifier providing interface configured to provide one or more decentral identifier(s) associated with one or more feedstock(s) to be fed to the chemical production network;
- a data gathering interface configured to gather based on one or more access element(s) generated and/or provided according to the methods of any of claims 1-11 or by the apparatuses of claim 12 property data from a producer of the one or more feedstock(s) to be fed to the chemical production network and/or one or more producer(s) of component(s) of the one or more feedstock(s) to be fed to the chemical production network;
- a registration interface configured to register at least one property of one or more feedstock(s) entering the chemical production network based on the gathered property data and to provide at least one registered property of the one or more feedstock(s) or component(s) thereof for attributing the at least one property to output material(s) produced by the chemical production network.

14. A decentral network node configured to provide one or more access element(s) according to the methods of any of claims 1-11 or by the apparatuses of claim 12 or a decentral network node configured to register and/or attribute at least one property of a feedstock according to the method of claims 13 or by the apparatuses of claim 14.

15. A feedstock associated with one or more access element(s) generated and provided according to the methods of any of claims 1-11 or by the apparatuses of claim 12 or a chemical production network, wherein a feedstock associated with the access element generated and provided according to the methods of any of claims 1-11 or by the apparatuses of claim 12 is fed to the chemical production network.
